(19) Europäisches Patentamt
European Patent Office
Office européen des brevets

(11) **EP 3 443 716 B1**

(12) **EUROPEAN PATENT SPECIFICATION**

(45) Date of publication and mention of the grant of the patent:
**14.08.2019 Bulletin 2019/33**

(21) Application number: **17719362.0**

(22) Date of filing: **06.04.2017**

(51) Int Cl.:
***H04L 5/00*** *(2006.01)* ***H04L 27/00*** *(2006.01)*
***H04W 74/08*** *(2009.01)* ***H04W 16/14*** *(2009.01)*
***H04W 72/12*** *(2009.01)*

(86) International application number:
**PCT/SE2017/050344**

(87) International publication number:
**WO 2017/180045 (19.10.2017 Gazette 2017/42)**

(54) **INTERMODULATION DISTORTION MITIGATION IN MIXED LICENSED/UNLICENSED CARRIER AGGREGATION**

VERMINDERUNG DER INTERMODULATIONSVERZERRUNG BEI GEMISCHTER LIZENZIERTER/NICHT LIZENZIERTER TRÄGERAGGREGATION

ATTÉNUATION DE DÉFORMATION INTERMODULATION DANS UNE AGRÉGATION DE PORTEUSE AUTORISÉE/NON AUTORISÉE MÉLANGÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.04.2016 US 201662320646 P**

(43) Date of publication of application:
**20.02.2019 Bulletin 2019/08**

(73) Proprietor: **Telefonaktiebolaget LM Ericsson (PUBL)**
**164 83 Stockholm (SE)**

(72) Inventors:
- **RAHMAN, Imadur**
  **SE-191 46 SOLLENTUNA (SE)**
- **BERGLJUNG, Christian**
  **SE-223 53 LUND (SE)**
- **FODOR, Gabor**
  **SE-165 52 HÄSSELBY (SE)**
- **KAZMI, Muhammad**
  **SE-174 64 SUNDBYBERG (SE)**

(74) Representative: **Zacco Sweden AB**
**Valhallavägen 117**
**Box 5581**
**114 85 Stockholm (SE)**

(56) References cited:
**EP-A2- 1 011 206 US-A1- 2014 086 081**

- **ALCATEL-LUCENT ET AL: "Required BS studies of Harmonics and Intermodulation Products caused by LTE Advanced 4DL/1UL Carrier Aggregation with 3 or 4 bands", 3GPP DRAFT; R4-150477, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Athens, Greece; 20150209 - 20150213 8 February 2015 (2015-02-08), XP050937946, Retrieved from the Internet: URL:http://www.3gpp.org/ftp/Meetings_3GPP_SYNC/RAN4/Docs/ [retrieved on 2015-02-08]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 443 716 B1

## Description

TECHNICAL FIELD

The present disclosure relates to methods and operations by network nodes and user equipment (UE) in a telecommunications system.

BACKGROUND

In recent years, 3GPP LTE usage in unlicensed spectrum (LTE-U) has been extensively considered and new solutions have been studied. LTE traditionally operates in operator specific licensed spectrum; however unlicensed operation can provide additional spectrum usage possibility by the LTE systems. Such unlicensed operation can take place either in assistance with a licensed carrier, or in standalone mode.

1. Licensed-assisted access (LAA) to unlicensed spectrum using LTE

The unlicensed spectrum (e.g. in 5-6 GHz range such as between: 5150 MHz-5925 MHz) can be simultaneously used by multiple different technologies including 3GPP LTE and IEEE Wi-Fi technologies. The "Licensed-Assisted Access" (LAA) intends to allow LTE equipment to also operate in an unlicensed radio spectrum. Note that, the same LAA concept can be used in other spectrum (i.e. 3.5GHz in North America) too. In LAA mode, devices connect in the licensed spectrum (primary cell or PCell) and use carrier aggregation to benefit from additional transmission capacity in the unlicensed spectrum (secondary cell or SCell). Therefore, a UE can be configured with one or more SCells in the unlicensed spectrum.

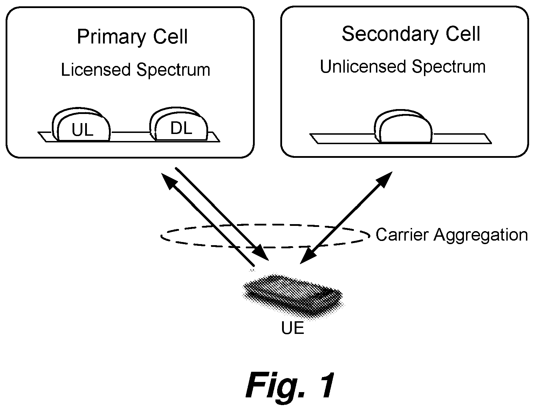

Unlicensed spectrum is shared with multiple wireless technologies (Wi-Fi, radar, Bluetooth, fixed satellite systems, etc). Therefore, when transmitting on unlicensed spectrum, a so-called listen-before-talk (LBT) method must be applied. LBT involves sensing the medium for a pre-defined minimum amount of time to determine whether there is a transmission or not, and backing off if the channel is busy (i.e. not transmitting if there is a transmission on the channel). Figure 1 illustrates a UE that operates in a LAA mode, communicating using LTE carrier aggregation (CA) that includes unlicensed spectrum provided by a secondary cell in combination with licensed spectrum provided by a primary cell.

1.1 Listen-before-talk (LBT)

According to the LBT procedure, the transmitter in unlicensed spectrum (e.g. base station in the case of DL transmission or the user terminal in the case of UL transmission) needs to listen on the carrier before it starts to transmit. If the medium is free the transmitter can transmit while if the medium is busy, e.g. some other node is transmitting, the transmitter cannot transmit and the transmitter can try again at a later time. This is referred to as listen before talk (LBT). Therefore, the LBT procedure enables a clear channel assessment (CCA) check before using the channel. Based on the CCA, if the channel is found to be clear then LBT is considered to be successful. But if the channel is found to be occupied then the LBT is considered to be a failure also known as LBT failure. The LBT failure requires the network node not to transmit signals in the same and/or subsequent subframes. Exact subframes and also number of subframes where transmission is forbidden depends on the specific design of the LBT scheme.

Due to LBT a transmission in an unlicensed band may be delayed until the medium becomes free again. In case there is no coordination between the transmitting nodes (which often is the case) the delay may appear random.

In the simplest form, LBT is performed periodically with a period equal to certain units of time; as an example, one unit of time duration i.e. 1 transmission time interval (TTI), 1 time slot, 1 subframe etc. The duration of listening in LBT is typically in the order of few to tens of μsec. Typically, each LTE subframe is divided in two parts for LBT purpose: in the first part, the listening takes place; and the second part carries data if the channel is seen to be free. The listening occurs at the beginning of the current subframe and determines whether or not data transmission will continue in this subframe and a few next subframes. Hence, the data transmission in a subframe P until subframe P+n is determined by the outcome of listening during the beginning of subframe P. The number n depends on system design and/or regulatory requirements.

1.2 Standalone access of unlicensed spectrum using LTE

There will also be LTE systems operating in unlicensed spectrum completely in a standalone manner. The difference between LAA and standalone LTE operation will be that, there will not be any licensed carrier to be aggregated with the unlicensed carrier in the standalone deployment, while an unlicensed carrier is always aggregated with licensed carrier in LAA operations. Standalone operation means that, uplink (UL) will also be allowed in unlicensed spectrum usage of LTE. Since there will not be any support from licensed carrier, the standalone LTE system is responsible for all operational functionalities in using unlicensed spectrum.

In a standalone operation, a UE may be capable of using only a single carrier, or be capable of aggregating more than one unlicensed carriers. In the latter case, both the primary cell (PCell) and the secondary cell(s) (SCell(s)) will be in unlicensed spectrum.

1.3 Unlicensed LTE operation in carrier aggregation mode

In LAA mode, the unlicensed carrier (or more than one unlicensed component carriers, CC) is (are) aggregated with one or more licensed carriers. Carrier aggregation is one of the ways of increasing the per user throughput for users with good channel conditions and with the capability of receiving and transmitting at higher data rate. A user equipment can be configured to two or three (or more) simultaneous bands in DL and/or in UL.

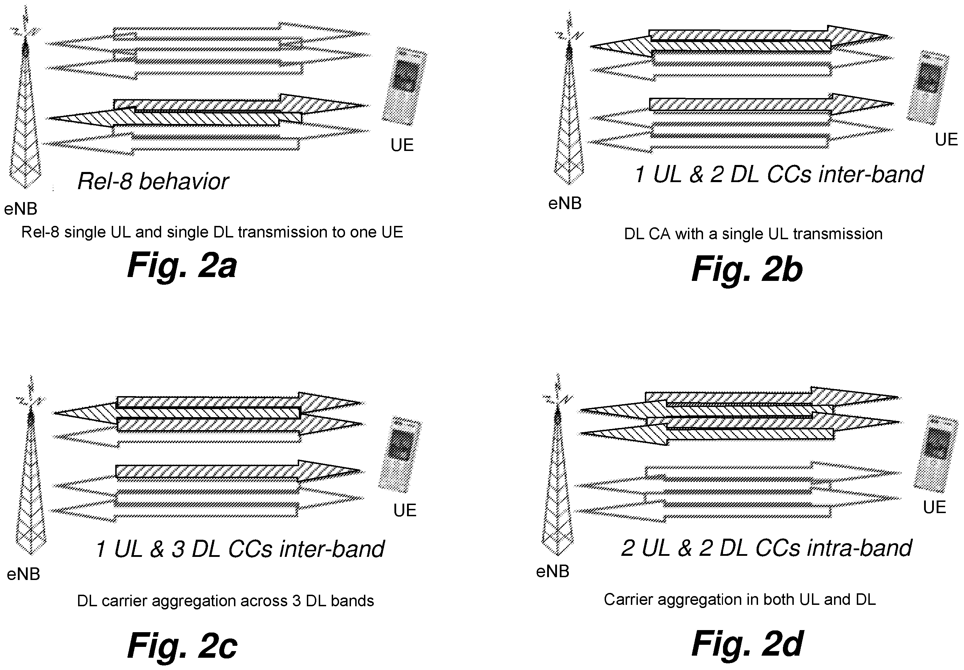

Figures 2a-2d illustrate an eNB which is configured to provide services to one or more UEs using a plurality, e.g. 4, of different cells at the same time. These cells are operated either in different bands or they could also be operated in the same band. In Rel-8, only one cell is used for communication between eNB and UE. Figure 2a illustrates an eNB operating under Rel-8 that provides a single UL and single DL transmission to one UE. Figure 2b illustrates an eNB that provides DL CA and a single UL transmission to one UE. Figure 2c illustrates an eNB that provides DL CA across three DL bands to one UE. Figure 2d illustrates an eNB that provides CA in both UL and DL directions with one UE.

1.4 Carrier Aggregation cases based on different number of component carriers (CCs) in DL and/or UL

1.4.1 Two DL CA (CA with two DL CCs and one UL CC)

As shown in Figure 2b, two of the cells are activated for one UE, which is the initial version of DL carrier aggregation. In this case, the UE is configured to receive in 2 DL bands simultaneously while still using UL in only one of the bands. The UL allocation in this case is arbitrary, meaning that either of the bands can be used for UL transmission. In carrier aggregation terms, the cell where UL is allocated for certain UE is the PCell (primary cell) for that UE, while the other aggregated cell is SCell (secondary cell). PCell and SCell combinations are UE specific.

1.4.2 Three DL CA (CA with three DL Component Carriers (CCs) and one or two UL CC)

3DL bands can be allocated to any UE, thus 3DL carrier aggregation is realized, as shown in Figure 2c. Similar to 2DL case, UL can be allocated to any of the bands.

1.4.3 Two UL CA (CA with two UL CCS and two or three DL CCs)

Contrary to the previous two cases, Figure 2d shows the case when UL carrier aggregation is also enabled for the terminal. In this case, only 2UL and 2DL carrier aggregation is shown. In case of UL carrier aggregation, PCell and SCell definitions are still UE specific.

1.5 Carrier aggregation deployment scenarios

Depending on the carrier frequency, and depending on the physical eNB deployment, the deployment of a CA-enabled system can be very different.

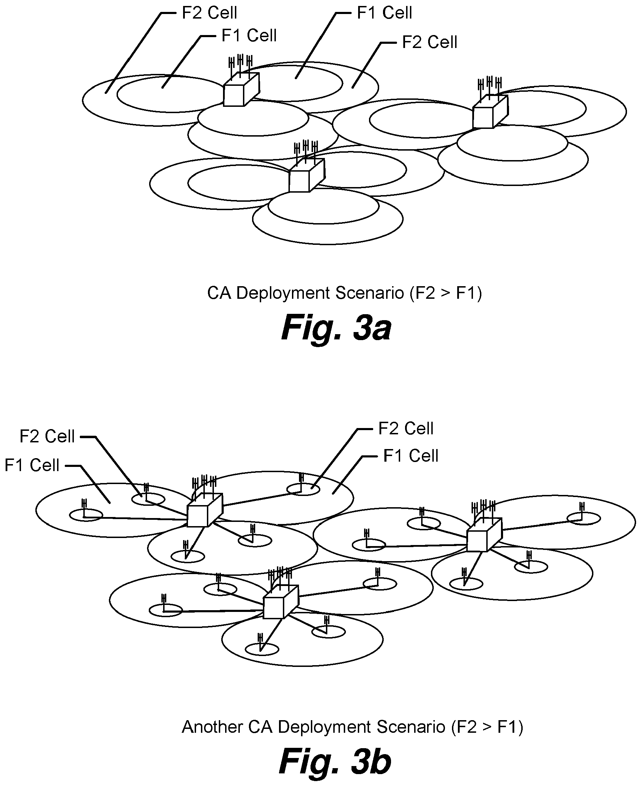

Figures 3a and 3b illustrate two examples of CA deployment configurations. Figure 3a illustrates that, F1 and F2 cells are co-located and overlaid, but F2 has smaller coverage due to larger path loss. Only F1 provides sufficient coverage and F2 is used to improve throughput. Mobility is performed based on F1 coverage. A likely scenario is when F1 and F2 are of different bands, e.g., F1 = {800 MHz, 2 GHz} and F2 = {3.5 GHz}, etc. It is expected that aggregation is possible between overlaid F1 and F2 cells.

Figure 3b shows a different kind of deployment. In this case, F1 provides macro coverage and on F2 Remote Radio Heads (RRHs) are used to improve throughput at hot spots. Mobility is performed based on F1 coverage. Likely scenario is when F1 and F2 are of different bands, e.g., F1 = {800 MHz, 2 GHz} and F2 = {3.5 GHz}, etc. It is expected that F2 RRHs cells can be aggregated with the underlying F1 macro cells.

1.6 Unlicensed LTE operation in dual connectivity mode

The unlicensed carrier can also be aggregated with a licensed carrier in dual connectivity operations. In dual connectivity mode, at least one component carrier (CC) in a master eNB (MeNB) is termed as PCell and at least one CC in a secondary eNB (SeNB) is termed as Primary SCell (PSCell). PCell and PSCell are functionally similar nodes. However, activation/deactivation/configuration/deconfiguration of the PSCell is controlled by the PCell. The connected nodes in DC operation are independent of each other, thus, all control signaling are done in separate way.

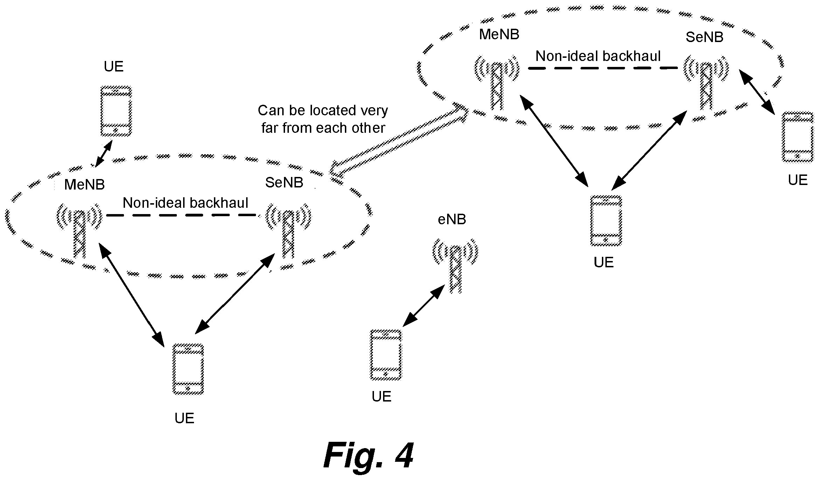

Referring to Figure 4, in dual connectivity (DC) a UE can be served by two nodes called master eNB (MeNB) and secondary eNB (SeNB). The UE is configured with PCC from both MeNB and SeNB. The PCell from MeNB and SeNB are called as PCell and PSCell respectively. The PCell and PSCell operate the UE typically independently. The UE is also configured with one or more SCCs from each of MeNB and SeNB. The corresponding secondary serving cells served by MeNB and SeNB are called SCell. The UE in DC typically has a plurality of transceiver circuits (TX/RX circuits), which different ones of the transceiver circuits being used for each of the connections with MeNB and SeNB. This allows the MeNB and SeNB to independently configure the UE with one or more procedures, e.g. radio link monitoring (RLM), DRX cycle, etc, on their PCell and PSCell respectively.

More specifically dual connectivity (DC) is a mode of operation of a UE in RRC_CONNECTED state, where the UE is configured with a Master Cell Group (MCG) and a Secondary Cell Group (SCG). Cell Group (CG) is a group of serving cells associated with either the MeNB or the SeNB. The MCG and SCG are defined as follows:

1. Master Cell Group (MCG) is a group of serving cells associated with the MeNB, including the PCell and optionally one or more SCells; and
2. Secondary Cell Group (SCG) is a group of serving cells associated with the SeNB including the pSCell (Primary Scell) and optionally one or more SCells

Both FDD and TDD duplex mode configurations are considered in MeNB and SeNB. Moreover, UL/DL configurations for TDD cells may be different for different carriers.

1.7 LSA (License Shared Access)

In a license shared access spectrum, more than one primary system is given license to operate. Between the primary systems, the spectrum is accessed based on some form of collision avoidance, for example, a mechanism similar to LBT. Secondary systems can use the spectrum provided that the spectrum is not used by any of the primary systems. Thus, a secondary system always has to vacate the spectrum when a primary system wants to use the spectrum in LSA. Besides, the primary systems compete for the spectrum based on some form of fairness mechanisms.

1.8 Unwanted emissions

In an ideal case, the transmitter radio is not supposed to transmit anything outside its transmission spectrum. However, due to practical radio systems, there will be unwanted signals outside the allowed spectrum. The power spectral density (PSD) depends on transmission power, transmission bandwidth, location of the UL RBs allocated to the UE, etc. The unwanted emissions depend on many issues, e.g. bandwidth of the signal, the transmission power, etc. For larger transmission bandwidth, the spectrum of unwanted emission is also larger compared to smaller transmission bandwidth, when PSD/RB is the same for both cases. Usually for fixed transmission power, with larger transmission bandwidth, the PSD will be smaller, thus the strength of unwanted signals will be smaller for larger transmission bandwidth compared to small transmission bandwidth for fixed transmission power, however the spread in frequency will also be larger.

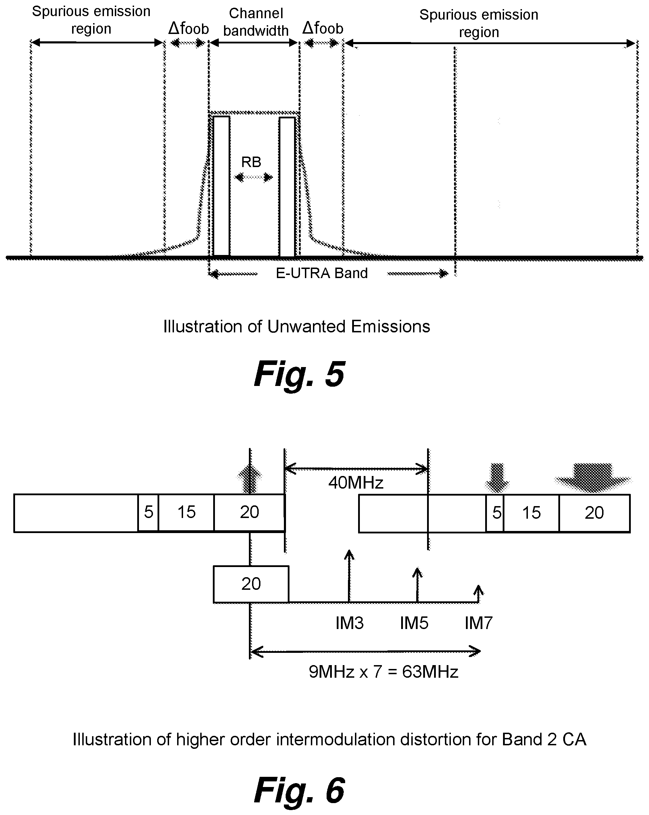

The UE specification outlines two separate kinds of unwanted emissions, namely (1) Out-Of-Band (OOB) emissions and (2) spurious emissions, both of which are outside the intended channel bandwidth. Figure 5 provides an example illustration of these unwanted emissions.

Out-of-band emissions are those which fall in a band close to the intended transmission, while spurious emissions can be at any other frequency. The precise boundary between the OOB range and the spurious range is different for different aspects of the LTE specifications.

LTE defines requirements for both types of unwanted emission, with those for spurious emissions being the more stringent. Since different bands have different maximum allowed transmission bandwidths and also different bands have different coexistence requirements, the spurious emission requirements are appended by additional spurious emission requirements in certain bands.

1.9 Inter-modulation distortion

Inter-modulation distortion (IMD) happens when two or more tones are present in a non-linear device, such as an amplifier in a receiver. In this case, intermodulation (IM) products are created. In a single UL transmission, IM products may happen due to the actual resource block (RB) allocation and its image being inter-modulated in the receiver. 3rd order and 5th order IMD (IM3, IM5) may cause receiver degradation, however 7th order IMD (IM7) can also be detrimental to receiver performance.

Figure 6, illustrates an example for higher order intermodulation distortion for Band 2 CA between 20MHz+5MHz PCC+SCC arrangements. Here, when only one UL is used at 20MHz (shown at the right-hand side of the UL band), then the distance in frequency for IM3, IM5 and IM7 falls as shown in figure.

The intermodulation products (IMP) cause intermodulation distortion on the receiver of a node where IMP falls. Similarly, harmonics falling into the receiver of the node causes harmonic distortion at the receiver of that node. Whether IMD falls on the receiver or not depends on the duplex gap, the position of UL and/or DL transmission signals, etc. Depending on IMD on the receive band, several different additional mitigation is defined. For example, inter-band CA between band-4 and band-12 causes harmonics (and thus harmonic distortion) and IMD from B12 to B4. Thus, Band 12 requires 0.8dB of insertion loss, which is 0.5dB higher compared to other generic cases.

1.10 Received Signal Strength Indicator (RSSI)

The received signal strength indicator (RSSI) is defined as the total received wideband power measured by a radio receiver node within some bandwidth (e.g. defined by the receiver filter). Specifically, the E-UTRA Received Signal Strength Indicator (RSSI), comprises the linear average of the total received power (in [W]) observed only in the configured OFDM symbol and in the measurement bandwidth over N number of resource blocks, by the UE from all sources, including co-channel serving and non-serving cells, adjacent channel interference, thermal noise, etc.

The RSSI thus contains the power density of the thermal noise and all received interference levels. In LTE, the RSSI is an important part of the reference signal received quality (RSRQ) measurement which is the ratio of the reference (pilot) signal received power (RSRP) and the RSSI.

The RSSI measurement can be used for determining whether a radio channel is currently used or idle, and thus the RSSI measurement can be an important measurement supporting LBT operation. Another typical usage of RSSI measurements is mobility management, primarily in RRC_CONNECTED mode.

Other related art in the technical field is disclosed in EP1011206 A2 and in US 2014/086081 Al. EP1011206 relates to a method to minimize power consumption in a communication system in which subscriber terminals are interconnected over wireline. US 2014/086081 discloses processes for performing channel quality measurements.

SUMMARY

When a wireless network uses multiple carriers (using, for example, carrier aggregation technology), intermodulation distortion and, in particular, out-of-band intermodulation distortion may cause interference between these multiple carriers. The existing solutions to the problem of out-of-band intermodulation distortion are designed to mitigate this problem assuming that the carrier types in terms of medium access control (LBT based or scheduled access) and licensed/unlicensed spectrum usage are similar. The problem with existing solutions is that they do not mitigate the inter-carrier interference due to harmonic distortion and/or intermodulation distortion when the deployed carriers are of different types.

The invention is defined by the appended claims. In the following, embodiments not falling within the scope of the claims are to be understood as examples useful for understanding the invention.

BRIEF DESCRIPTION OF THE DRAWINGS

The accompanying drawings, which are included to provide a further understanding of the invention and are incorporated in and constitute a part of this application, illustrate certain embodiments of the invention. In the drawings:

Figure 1 illustrates a UE that operates in a LAA mode to communicate using LTE carrier aggregation (CA) that includes unlicensed spectrum provided by a secondary cell in combination with licensed spectrum provided by a primary cell;

Figures 2a-2d illustrate an eNB which is configured to provide services to one or more UEs using a plurality of different cells at the same time;

Figures 3a and 3b illustrate two examples of CA deployment configurations;

Figure 4 illustrates a telecommunications system that provides dual connectivity modes for UEs;

Figure 5 illustrates unwanted emissions, including Out-Of-Band emissions and spurious emissions, that can occur during transmissions;

Figure 6, illustrates an example for higher order intermodulation distortion for Band 2 CA;

Figures 7-11 are flowcharts of methods and operations that can be performed by a first node of a telecommunications system in accordance with various embodiments of the present disclosure;

Figure 12 is a block diagram of a UE, for use in a telecommunications system, that is configured to perform operations according to one or more embodiments disclosed herein;

Figure 13 is a block diagram of a network node, for use in a telecommunications system, that is configured according to one or more embodiments disclosed herein for a network node;

Figure 14 illustrates modules residing in a first node of a telecommunications system that perform operations as disclosed herein according to some embodiments; and

Figure 15 illustrates modules residing in another type of first node of a telecommunications system that perform operations as disclosed herein according to some embodiments.

## DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment. Any two or more embodiments described below may be combined in any way with each other.

Various embodiments of the present disclosure are directed to methods and operations in a UE and a network node that employ carrier type dependent algorithms that mitigate the interference caused by intermodulation distortion from one component carrier to the other component carriers. Thus, various embodiments operate to take into account the distinct characteristics of the component carriers and specifically how signal transmission takes place in the component carriers.

As an example, when a UE uses scheduled access (scheduled by its serving eNB) in a component carrier operating in licensed spectrum, the serving eNB may instruct the UE to use reduced power or even prohibit transmission on certain resource blocks that would cause interference to the component carrier.

As another example, when a UE uses scheduled access (scheduled by its serving eNB) in a component carrier operating in licensed spectrum, the serving eNB may restrict transmissions in parts of the band that is not exposed to inter-band interference from transmitters that use LBT type of access on their carrier frequencies.

As a third example, if a scheduled type of carrier uses TDD frame structure type then the UL transmission is avoided in the second type of carrier in the subframes when first type of carrier uses a subframe for UL transmission.

Specifically, the embodiments are applicable to UE as well as to network node that transmits signals on two or more carriers where at least one second type of carrier is contention based (e.g. LBT is required) while the other first type of carrier is contention free or contention based. The first node transmits signals with reduced configuration (e.g. lower power etc) on at least one first type of carrier if the LBT fails on the at least one second type of carrier. The first node further adapts at least one parameter related to measurement for LBT procedure (e.g. signal measurement, LBT threshold etc) based on harmonic distortion and intermodulation distortion (IMD) generated by the at least one first type of carrier.

The term LBT used herein may correspond to any type of Carrier sense multiple access (CSMA) procedure or mechanism which is performed by the node on a carrier before deciding to transmit signals on that carrier. CSMA or LBT may also interchangeably be called clear channel assessment (CCA), or clear channel determination.

In an unlicensed spectrum or frequency band, contention based transmission is allowed i.e. two or more devices (UE or network nodes) can access even the same part of spectrum. In this case no operator owns the spectrum. In a licensed spectrum or licensed band only contention free transmission is allowed i.e. only devices (UE or network nodes) allowed by the owner of the spectrum license can access the unlicensed spectrum.

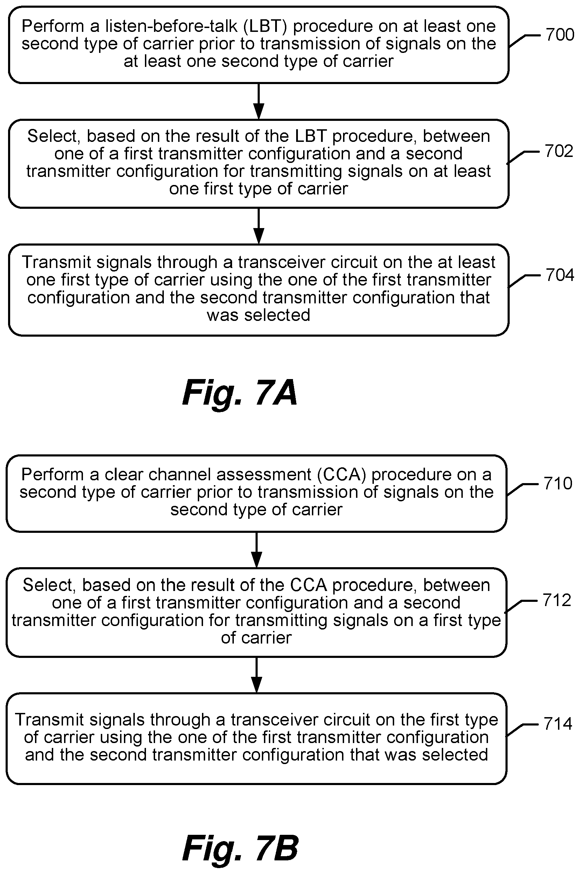

Figure 7A illustrates operations and methods that can be performed by a first node for transmitting signals to a second node in accordance with one embodiment. Referring to Figure 7, the operations and methods include: 1) performing (block 700) a LBT procedure on at least one second type of carrier prior to transmission of signals on the at least one second type of carrier; 2) selecting (block 702), based on the result of the LBT procedure, between one of a first transmitter configuration and a second transmitter configuration for transmitting signals on at least one first type of carrier; and 3) transmitting (block 704) signals through a transceiver circuit on the at least one first type of carrier using the one of the first transmitter configuration and the second transmitter configuration that was selected.

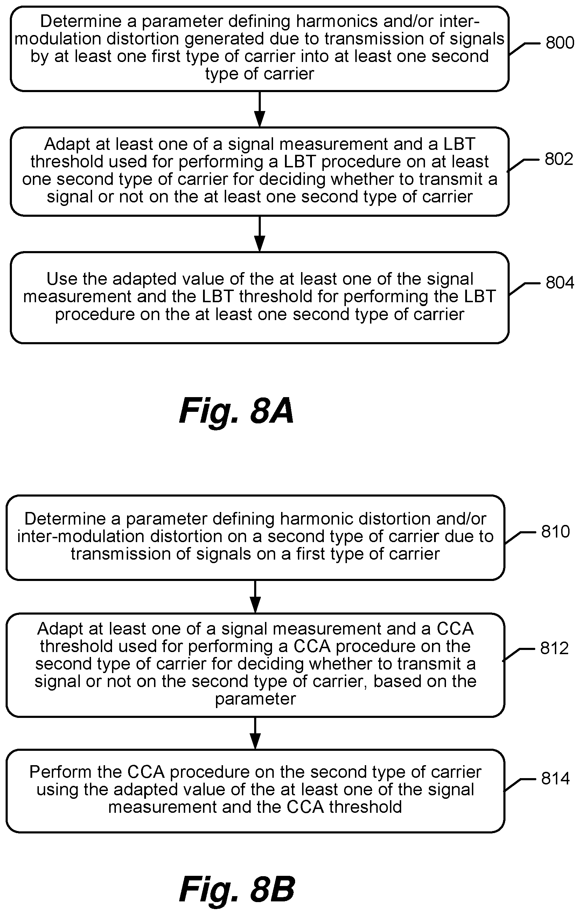

Although the term "LBT" in Figure 7A can be replaced with the term "CCA" in view of the explanation above that the terms are interchangeable, Figure 7B is provided to illustrate the corresponding operations and methods performed by a first node. Referring to Figure 7B, the operations and methods include: 1) performing (block 710) a CCA procedure on a second type of carrier prior to transmission of signals on the second type of carrier; 2) selecting (block 712), based on the result of the CCA procedure, between one of a first transmitter configuration and a second transmitter configuration for transmitting signals on a first type of carrier; and 3) transmitting (block 714) signals through a transceiver circuit on the first type of carrier using the one of the first transmitter configuration and the second transmitter configuration that was selected.Figure 8A illustrates operations and methods that can be performed by a first node for transmitting signals to a second node in accordance with another embodiment. Referring to Figure 8, the operations and methods include: 1) determining (block 800) a parameter defining harmonic distortion and/or inter-modulation distortion, IMD, on a second type of carrier due to transmission of signals on a first type of carrier; 2) adapting (block 802) at least one of a signal measurement and a LBT threshold used for performing a LBT procedure on at least one second type of carrier for deciding whether to transmit a signal or not on the at least one second type of carrier; and 3) performing (block 804) the LBT procedure on the second type of carrier using the adapted at least one of the signal measurement and the LBT threshold to decide whether to transmit a signal or not on the second type of carrier.

Although the term "LBT" in Figure 8A can be replaced with the term "CCA" in view of the explanation above that the terms are interchangeable, Figure 8B is provided to illustrate the corresponding operations and methods performed by a first node. Referring to Figure 8B, the operations and methods include: 1) determining (block 810) a parameter defining harmonic distortion and/or inter-modulation distortion, IMD, on a second type of carrier due to transmission of signals on a first type of carrier; 2) adapting (block 812) at least one of a signal measurement and a CCA threshold used for performing a CCA procedure on a second type of carrier for deciding whether to transmit a signal or not on the second type of carrier; and 3) performing (block 814) the CCA procedure on the second type of carrier using the adapted at least one of the signal measurement and the LBT threshold to decide whether to transmit a signal or not on the second type of carrier.

Potential advantages that may be provided by one or more of these embodiments and/or other embodiments disclosed below, is that they mitigate inter-carrier interference caused by intermodulation distortion. For example, the first node can adapt its signal measurement and/or LBT/CCA threshold which its uses for performing a LBT/CCA procedure on a second type of carrier, based on the determined harmonic distortion and/or IMD generated in the second type of carrier by signals transmitted using the first type of carrier. The embodiments can work in cases in which the aggregated carriers are different in terms of using licensed and unlicensed frequency bands and relying on scheduled and listen before talk type of medium access control. The following description of some embodiments uses specific terminology such as the first type of carrier(s) and the second type of carrier(s). However, it is to be understood that the first type of carrier could be a carrier where typically no LBT is performed for accessing that carrier, while the second type of carrier is one where LBT is performed to access that carrier. However, LBT may also be performed on the first type of carrier. A combination of use cases in terms of LBT procedure for accessing the first and the second type of carriers used in multicarrier operation can be as follows and illustrated in Table 1, below:

Table 1: Use cases in terms of LBT procedure on first (1st) and second (2nd) types of carriers

| Use cases | 1st type of carriers | 2nd type of carriers |
|---|---|---|
| 1 | No LBT is done | LBT is done |
| 2 | LBT is done | LBT is done |

In some other embodiments, a first type of carrier can be a carrier with contention free access (e.g. licensed carrier), while a second type of carrier can be a carrier with contention based access (e.g. unlicensed carrier). As an example, a number of combinations in terms of access mechanism can be as shown in Table 2 and Table 3, below:

Table 2: Use cases in terms of access mechanism on 1st and 2nd types of carriers

| Use cases | 1st type of carriers | 2nd type of carriers |
|---|---|---|
| 1 | Contention based | Contention based |
| 2 | Contention free | Contention based |

Table 3: Use cases in terms of access mechanism based on licensed or unlicensed conditions of 1st and 2nd types of carriers

| Use cases | 1st type of carriers | 2nd type of carriers |
|---|---|---|
| 1 | Licensed | Licensed shared access (LSA) |
| 2 | Unlicensed | Unlicensed |
| 3 | Licensed | Unlicensed |
| 4 | Unlicensed | Licensed shared access (LSA) |

LBT is performed for accessing an unlicensed carrier, while no LBT is performed for accessing a licensed carrier.

Accordingly, in a further embodiment, the first node decides whether to transmit a signal or not on the first type of carrier without performing the CCA procedure on the first type of carrier using the adapted at least one of the signal measurement and the CCA threshold. In contrast, in another embodiment, the first node decides whether to transmit a signal or not on the first type of carrier by performing the CCA procedure on the first type of carrier using the adapted at least one of the signal measurement and the CCA.

The term carrier or carrier frequency used herein may correspond to any frequency channel, which the first node or the second node may access. The carrier is interchangeably referred to as channel, frequency channel, serving cell (e.g. PCell, SCell, PSCell, etc), etc.

Some embodiments refer to a first node and a second node as two nodes: 1) the first node transmit signals on at least the second type of carriers and performs LBT prior to transmission on the second type of carrier; and 2) the second node receives signals from the first node on at least the second type of carriers.

The first node can be network node or user equipment. For example, in some embodiments the first node is a network node while in some other embodiments the first node is a UE. The term node is generic and can be a first node or a second node.

An example of a node could be a network node, which could be a more general term and can correspond to any type of radio network node or any network node, which communicates with a user equipment and/or with another network node. Examples of network nodes are NodeB, base station (BS), multi-standard radio (MSR) radio node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME etc), O&M, OSS, SON, positioning node (e.g. E-SMLC), MDT, etc.

Another example of a node could be user equipment, this is a non-limiting term user equipment (UE) and it refers to any type of wireless device communicating with a network node and/or with another UE in a cellular or mobile communication system. Examples of a UE are target device, device to device (D2D) UE, machine type UE or UE capable of machine to machine (M2M) communication, PDA, iPAD, Tablet, mobile terminals, smart phone, laptop embedded equipped (LEE), laptop mounted equipment (LME), USB dongles, etc.

In some embodiments, generic terminology, "radio network node" or simply "network node (NW node)", is used. It can be any kind of network node which may include base station, radio base station, base transceiver station, base station controller, network controller, evolved Node B (eNB), Node B, relay node, access point, radio access point, Remote Radio Unit (RRU) Remote Radio Head (RRH), etc.

In embodiments herein, any of the above mentioned nodes could become "the first node" and/or "the second node".

A component carrier (CC) also interchangeably referred to as carrier, PCC or SCC is configured at the UE by the network node using higher layer signaling, e.g., by sending RRC configuration message to the UE. The configured CC is used by the network node for serving the UE on the serving cell (e.g. on PCell, PSCell, SCell etc) of the configured CC. The configured CC is also used by the UE for performing one or more radio measurements (e.g., RSRP, RSRQ, etc) on the cells operating on the CC, e.g., PCell, SCell or PSCell and neighboring cells.

All methods and operations arising under the inventive embodiments disclosed herein are applicable to both Carrier Aggregation (CA) and Dual Connectivity (DC) usage of unlicensed band, unless otherwise stated.

Pcell and Scell Deployment Scenarios According to Some Embodiments

For any LAA combination, as an example Pcell and Scells can be configured in different bands in any of the manners as shown in Table 4, below.

Table 4: Example of PCell and SCells in different bands

| | Pcell | Scell | SCell | Scell | Scell |
|---|---|---|---|---|---|
| | Band x | Band y | Band z | Band z | Band z |
| Case 1 | DL & UL | DL only | DL only | DL only | DL only |
| Case 2 | DL & UL | DL only | DL & UL | DL & UL | DL & UL |
| Case 3 | DL & UL | DL & UL | DL & UL | DL & UL | DL & UL |

In Table 4, the first type of carriers belong to either in band x or in band y or in both, while the second type of carriers belong to band z (in this particular example). In the table, only one band containing second type of carriers is listed, however the solutions described in embodiments herein are also valid for more than one such bands containing second type of carriers.

In Case 1 of Table 4, only the PCell operating on band x causes harmonic distortion and IMD into the DL SCell(s) of band Z.

For Case 2 of Table 4, the harmonic relationship between band x and band y can be limiting for UL in band z. Similarly, the harmonic distortion and IMD due to UL in band x and UL in band y in DL SCells of band Z can be worse than harmonic distortion from UL of band x only in DL SCells of band Z (Case 1). Therefore in terms of harmonic distortion and IMD into DL SCells of band Z, Case 3 of Table 4 can be worse than Case 2, and Case 2 can be worse than Case 1.

Methods in first node of adapting operation on the first type of carriers to avoid UL harmonic distortion to second type of carriers

In some embodiments, a method is applied in the first node when the first node applies LBT on at least one second type of carrier and the LBT fails or is expected to fail for the at least one second type of carrier. The method comprises adapting one or more parameters related to transmission of signals on or transmission configuration of or transmitter configuration of at least one first type of carrier.

With reference again to Figure 7A, the operational steps performed in the first node operating at least one first type of carrier and at least one second type of carrier, include:

1. performing (block 700) a LBT procedure on the at least one second type of carrier prior to transmission of signals on the at least one second type of carrier;
2. Selecting (block 702), based on the result of the LBT procedure, between one of a first transmitter configuration and a second transmitter configuration for transmitting signals on at least one first type of carrier; and
3. Transmitting (block 704) signals through a transceiver circuit on the at least one first type of carrier using the one of the first transmitter configuration and the second transmitter configuration that was selected.

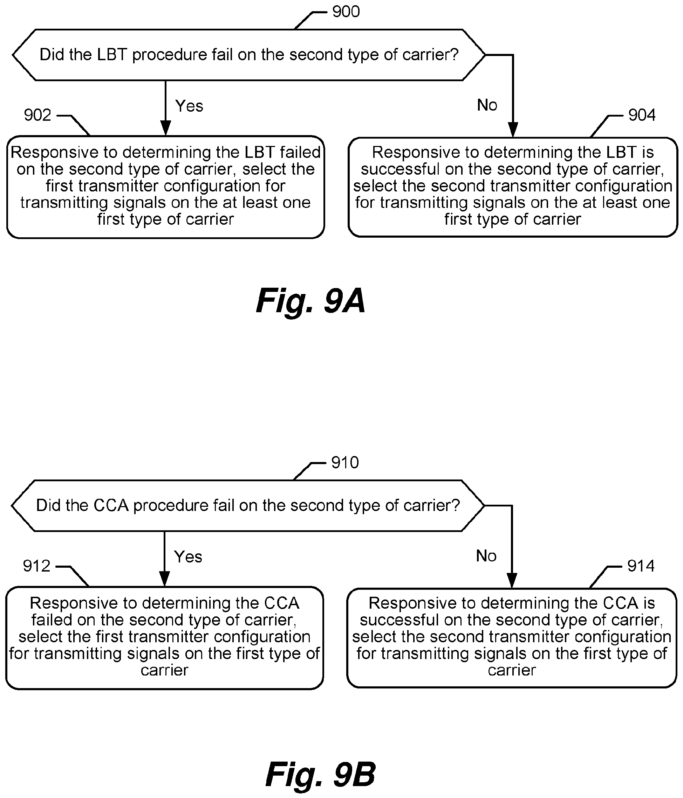

In a further embodiment, the first node performs operational steps illustrated in Figure 9A that include, for the selecting step (block 702 of Fig. 7A):

1. determining (block 900) whether the LBT procedure failed on the second type of carrier;
2. selecting (block 902) the first transmitter configuration for transmitting signals on the at least one first type of carrier responsive to determining the LBT fails on the second type of carrier; and
3. selecting (block 904) the second transmitter configuration for transmitting signals on the at least one first type of carrier responsive to determining the LBT is successful on the second type of carrier.

Although the term "LBT" in Figure 9A can be replaced with the term "CCA" in view of the explanation above that the terms are interchangeable, Figure 9B is provided to illustrate the corresponding operations and methods performed by a first node. Referring to Figure 9B, the first node performs operational steps that include, for the selecting step (block 712 of Fig. 7B):

1. determining (block 910) whether the CCA procedure failed on the second type of carrier;
2. selecting (block 912) the first transmitter configuration for transmitting signals on the first type of carrier responsive to determining the CCA failed on the second type of carrier; and
3. selecting (block 914) the second transmitter configuration for transmitting signals on the first type of carrier responsive to determining the CCA is successful on the second type of carrier.

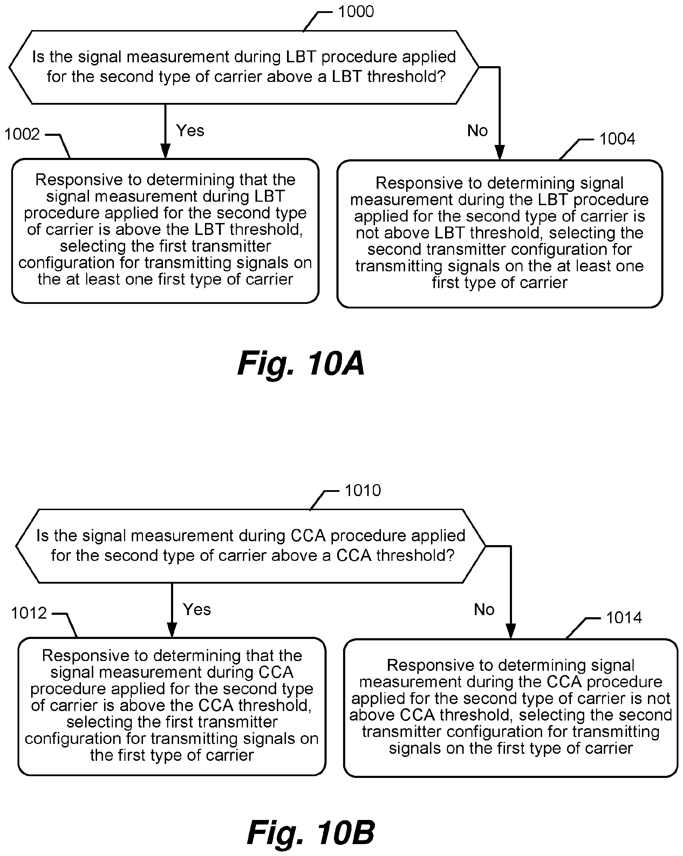

In an alternative embodiment, the first node performs operational steps illustrated in Figure 10A that include, for the selecting step (block 702 of Fig. 7A):

1. determining (block 1000) whether signal measurement during a LBT procedure applied for the second type of carrier is above a LBT threshold;
2. responsive to determining (block 1000) that the signal measurement during the LBT procedure applied for the second type of carrier is above the LBT threshold, selecting (block 1002) the first transmitter configuration for transmitting signals on the at least one first type of carrier; and
3. responsive to determining (block 1000) that the signal measurement during the LBT procedure applied for the second type of carrier is not above the LBT threshold, selecting (block 1004) the second transmitter configuration for transmitting signals on the at least one first type of carrier.

Although the term "LBT" in Figure 10A can be replaced with the term "CCA" in view of the explanation above that the terms are interchangeable, Figure 10B is provided to illustrate the corresponding operations and methods performed by a first node. Referring to Figure 10B, the first node performs operational steps that include, for the selecting step (block 712 of Fig. 7B):

1. determining (block 1010) whether signal measurement during a CCA procedure applied for the second type of carrier is above a CCA threshold;
2. responsive to determining (block 1010) that the signal measurement during the CCA procedure applied for the second type of carrier is above the CCA threshold, selecting (block 1012) the first transmitter configuration for transmitting signals on the first type of carrier; and
responsive to determining (block 1000) that the signal measurement during the CCA procedure applied for the second type of carrier is not above the CCA threshold, selecting (block 1014) the second transmitter configuration for transmitting signals on the first type of carrier.

Examples of signal measurement operations that can done for LBT during LBT procedure can include measuring RSSI, signal strength, preamble detection or reference signal detection, total received, and/or power including noise etc.

Examples of parameters related to transmitter configuration for transmitting signals on the at least one first type of carrier are:

1. transmit power of signals;
2. number of physical channels, e.g., resource blocks, subframes, slots, resource elements;
3. location of physical channels within the bandwidth of the first type of carrier; and
4. transport format of signals, e.g., number of data blocks, data block size, modulation type, coding rate, MCS etc.

The first and the second transmitter configurations differ in that the former is more restricted than the latter. The use of less restricted transmitter configuration provides an enhanced transmission performance compared with the use of more restricted transmitter configuration. This means the second transmitter configuration provides an enhanced transmission performance compared with the first transmitter configuration. When using restricted transmitter configuration, the first node either does not transmit any signal on the first type of carrier or transmits limited signals on the first type of carrier. This is explained with several examples below for adaptation of the parameters associated with or characterizing transmitter configuration in the first node based on the outcome of the LBT procedure.

In one embodiment, the first node selects (block 702 of Fig. 7A) a first transmission power level (P1) in the first transmitter configuration responsive to when the LBT procedure (block 700 of Fig. 7A) fails on the second type of carrier, and selects (block 702 of Fig. 7A) a second transmission power level (P2) in the second transmitter configuration responsive to when the LBT procedure is successful on the second type of carrier, where the first transmission power level P1 is less than the second transmission power level P2.

In another embodiment, the first node selects (block 702 of Fig. 7A) a first number of physical channels (C1) in the first transmitter configuration responsive to when the LBT procedure (block 700 of Fig. 7A) fails on the second type of carrier, and selects (block 702 of Fig. 7A) a second number of physical channels (C2) in the second transmitter configuration responsive to when the LBT procedure is successful on the second type of carrier, where $C1<C2$.

In another embodiment, the first node selects (block 702 of Fig. 7A) a modulation type of first order M1 in the first transmitter configuration responsive to when the LBT procedure (block 700 of Fig. 7A) fails on the second type of carrier, and selects (block 702 of Fig. 7A) a modulation type of second order M2 in the second transmitter configuration responsive to when the LBT procedure is successful on the second type of carrier, where the modulation type of first order M1 is less than the modulation type of second order M2. In other words, M1 is of lower order than M2. For example, M1 and M2 are QPSK and 16QAM respectively, or M1 and M2 are 16QAM and 64QAM respectively.

In another embodiment, the first node selects (block 702 of Fig. 7A) a first transport block or data block of first length D1 in the first transmitter configuration responsive to when the LBT procedure (block 700 of Fig. 7A) fails on the second type of carrier, and selects (block 702 of Fig. 7A) a second transport block or data block of second length D2 in the second transmitter configuration responsive to when the LBT procedure is successful on the second type of carrier, where the first length D1 is less than the second length D2.

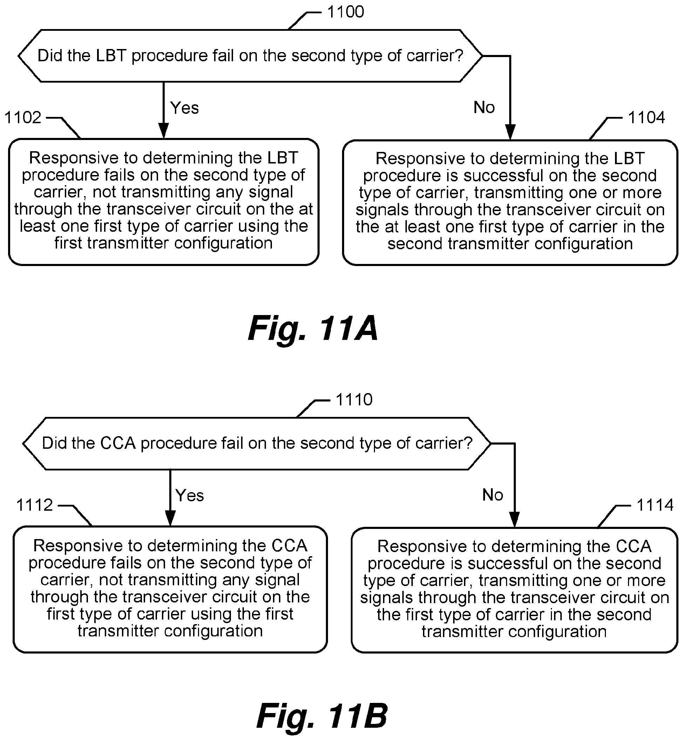

Referring to Figure 11A, in another embodiment, the first node determines (block 1100) whether the LBT procedure (block 700 of Fig. 7A) failed on the second type of carrier. The first node then responds to the determination (block 1100) that the LBT procedure failed by not transmitting (block 1102) any signal through the transceiver circuit on the at least one first type of carrier using the first transmitter configuration. In contrast, the first node responds to the determination (block 1100) that the LBT procedure is successful on the second type of carrier, by transmitting (block 1104) one or more signals through the transceiver circuit on the at least one first type of carrier in the second transmitter configuration. The first node may refrain from transmitting signals in the first transmitter configuration by any one or more of the following operations:

1. Operating to deactivate the first type of carrier, e.g., deactivating SCell;
2. Operating to de-configure the first type of carrier, e.g., deconfiguring SCell;
3. Operating to not schedule signals on first type of carrier;
4. Operating to ignore any scheduling grant or request received for transmitting signals on first type of carrier; and
5. Operating to turn off the transmitter used for operating the first type of carrier.

Although the term "LBT" in Figure 11A can be replaced with the term "CCA" in view of the explanation above that the terms are interchangeable, Figure 11B is provided to illustrate the corresponding operations and methods performed by a first node. Referring to Figure 11B, the first node determines (block 1110) whether the CCA procedure (block 710 of Fig. 7B) failed on the second type of carrier. The first node then responds to the determination (block 1110) that the CCA procedure failed by not transmitting (block 1112) any signal through the transceiver circuit on the first type of carrier using the first transmitter configuration. In contrast, the first node responds to the determination (block 1110) that the CCA procedure is successful on the second type of carrier, by transmitting (block 1114) one or more signals through the transceiver circuit on the first type of carrier in the second transmitter configuration.

The above principles are further elaborated with specific examples below when the first type of carriers operate on band x and/or band y and the second type of carriers operate on band z.

For example, responsive to determining that the LBT applied by the first node for transmitting signals on at least one second type of carrier belonging to band z fails, the transmit power of signals on one or more first type of carriers belonging to band x is controlled to be reduced below a threshold level.

In another example of this embodiment, responsive to determining that the LBT applied by the first node for transmitting signals on at least one second type of carrier belonging to band z fails, the transmit power of signals for transmission on one or more first type of carriers belonging to band x and/or band y is controlled to be reduced below their respective threshold levels. The reduction of power in band x, in band y or in both band x and band y, depends on which first type of carriers are transmitting in UL.

In another example, responsive to determining that the LBT applied by the first node for transmitting signals on at least one second type of carrier belonging to band z fails, the number of physical channels for transmission in one or more first type of carriers may also be controlled to be reduced in band x, band y, or in both bands x and y below their respective threshold levels.

In another example the first node is operated to drop or discard the transmission of signals on at least one of the first type of carriers responsive to occurrence of all of the following conditions:

1. the first node determining the LBT procedure (block 700 of Fig. 7A) failed on the at least one second type of carrier,
2. the first node is configured with more than one first type of carriers for transmission of signals, and
3. transmissions of signals on more than one first type of carriers are scheduled.

In the above example the first node may drop or discard the transmission of signals based on one or more of the following mechanisms: autonomously, pursuant to a pre-defined rule, and responsive to a configuration received from the second node.

For example, in a scenario where the first node (e.g. UE) is configured with two first type of carriers comprising of PCell on PCC belonging to band x and SCell1 on SCC1 belonging to band y, and one second type of carrier comprising of SCell2 on SCC2 belonging to band z. The first node is further scheduled for transmission of signals on PCell and SCell1. In one further embodiment, during LBT procedure, responsive to determining that the measured signal level (e.g. received interference power, RSSI etc) on SCC2 is above a threshold, the first node can decide to drop transmission of signals on SCell1. In a further embodiment, only when the LBT is determined to fail on SCC2 does the first node operate to decide whether to drop transmission of signals on SCell1.

In some other embodiments, the UE may apply the restriction or stop transmission at one or more of the UL transmissions on one or more first type of carriers depending on the signal level of IMD and harmonic distortion generated by those carriers when LBT fails on the second type of carrier or the LBT is expected to fail (e.g. received interference is above threshold) on the second type of carrier. For example, responsive to Band x UL transmission causing 2nd harmonic distortion and Band y UL transmission causing third harmonic distortion on the band z, the UE can responsively stop transmission (or apply restriction) on the UL carrier which causes larger harmonic distortion (e.g. harmonic distortion with higher power and/or of higher order) to band z.

For some bands that support second type of carriers, the passband can be very large and an UL harmonics from a first type of carrier can only impact certain part of the spectrum. In this case, an embodiment can operate provisions to cause different actions from the UE based on exact locations of the harmonics. In a further embodiment, responsive to determining that the UL harmonic distortion from a first type of carrier falls into lower part of the spectrum, the above-mentioned restriction on UL (either reduced Tx power or reduced UL RBs) can be applied when UL in second type of carrier is in the lower part of the spectrum in frequency domain. Thus, no restriction on first type of UL carrier is needed if second type of UL carrier uses higher part of the spectrum in frequency domain in this case.

Methods in first node of adapting operation on second type of carriers to avoid UL harmonic distortion from first type of carriers

In another embodiment, the first node performs one or more of the following operations in one or more second type of carriers to avoid impact of IMD and harmonic distortion from the first type of carriers into the second type of carriers:

1. Methods in first node of adjusting the LBT signal measurement or LBT threshold for second type of carriers; and
2. Methods in first node of blanking transmission on second type of carriers.

Methods in first node of adjusting LBT signal measurement or LBT threshold for second type of carriers

A signal (e.g. RSSI etc) is measured by the first node on at least one second type of carrier in a time resource during LBT procedure. The measured value of the signal is compared with a threshold (H) by the first node to determine whether there is any other transmitter active in any of the second type of carriers on which LBT is applied.

According to one aspect of this embodiment, when the first node transmits a signal on any of the first type of the carriers, while it also performs LBT for any of the second type of carriers, then the signal measurement used for LBT detection (e.g. RSSI) and/or the value of threshold (H) is adjusted or adapted by a parameter which is a function of harmonic distortion and IMD generated by one or more first type of carriers on said one or more second type of carriers.

For example, the adapted value of the signal measurement value (M') is defined based on the following generalized function:

$$M' = f(M, \mu, \alpha) \qquad (1)$$

For example, the adapted value of the signal measurement value (M') is also expressed by the following specific function:

$$M' = M - \mu \quad [\text{dBm}] \qquad (2)$$

In yet another example the value of M' can be expressed by the following:

$$M' = M/\mu \qquad (3)$$

Where:

1. M is the signal measurement value (e.g. RSSI) on at least one second type of carrier by the first node during the LBT procedure;
2. $\mu$ is IMD and/or power of harmonic distortion generated by the transmission of at least one first type of carrier while the first node performs LBT on the second carrier i.e. when it measures M; and
3. $\alpha$ is a margin and as special case it can be 0 dB or 1 (in linear scale) or negligible.

The above examples of adaptation of measured signal value (M') enable the first node to exclude the impact of harmonic distortion/IMD from the signal measurement for comparing with the LBT threshold (H).

In another example embodiment, instead of the signal measurement value, the LBT threshold (H') is adapted. The adapted value, H', can be determined based on the following generalized function:

$$H' = f(H, \mu, \beta) \qquad (4)$$

For example the adapted value of H' is also expressed by the following specific function:

$$H' = H + \mu \quad [dBm] \qquad (5)$$

In yet another example the value of M' can be expressed by the following:

$$H' = H * \mu \qquad (6)$$

where $\beta$ is a margin and as special case it can be 0 dB or 1 (in linear scale) or negligible.

The above examples of adaptation of LBT threshold (H') enable the first node to include the impact of harmonic distortion/IMD in the LBT threshold. In this approach, the first node compared unadapted signal measurement value (i.e. M) with H' when determining whether the LBT on the second type of carrier is successful or not.

The value of $\mu$ can be determined based on one or more of the following:

1. Pre-defined information derived based on extensive simulations, where an average can be used for the RSSI adjustments;
2. By means of actual measurement campaigns when the first node is configured with the first and the second type of carriers and transmit on the first type of carrier while doing LBT on the second type of carrier;
3. Value configured by the second node e.g. network node configuring the UE with maximum value of $\mu$; and
4. Autonomously determined by the first node by measuring or estimating power of IMD e.g. based on order of harmonic distortion and transmit power of signals on the first type of carrier.

Methods in first node of blanking transmission on second type of carriers

In another aspect of an embodiment it is assumed that a first type of carrier uses TDD frame structure type or any other frame structure that provides alternating UL and DL between subframes. Example of such frame structure is HD-FDD. In this case, the transmission of signals can be avoided, minimized, or reduced in a second type of carrier in one or more time resources (e.g. time slot, subframe, symbols etc) when the first type of carrier uses the same time resources (e.g. subframe) for transmission of signals. This is because the first type of carrier causes IMD and harmonic distortion in the second type of carrier and this degrades the performance of the second type of carrier.

Table 5 below shows an example embodiment where one first type carrier and one second type of carrier belong to band x and band z respectively. The example embodiment can be extended for cases with more than one first type of carriers. Alternatively, the transmission can also be avoided in first type of carrier when second type of carrier in band z transmits signals.

Table 5: Avoidance of transmission of signals in band Z (second type of carrier) during subframe (SF)#3 and SF#8.

| | | SF#1 | SF#2 | SF#3 | SF#4 | SF#5 | SF#6 | SF#7 | SF#8 | SF#9 | SF#10 |
|---|---|---|---|---|---|---|---|---|---|---|---|
| Band x | FS2; 4:1 TDD config | DL | DL | **UL** | DL | DL | DL | DL | **UL** | DL | DL |
| Band z | FS3 | Can be UL or DL | Can be UL or DL | UL can be avoided herein band 46 | Can be UL or DL | Can be UL or DL | Can be UL or DL | Can be UL or DL | UL can be avoided herein band 46 | Can be UL or DL | Can be UL or DL |

Thus, in accordance with various of the embodiments disclosed herein, a first node transmitter (a network node or a UE) can transmit signals on two or more carriers where at least one second type of carrier is contention based (e.g. LBT is required) while the other second type of carrier is contention free or contention based. The first node transmits signals with reduced configuration (e.g. lower power etc) on at least one first type of carrier if the LBT fails on the at least one second type of carrier. The first node further adapts at least one parameter related to measurements associated with an LBT procedure (e.g. signal measurement, LBT threshold etc) based on a harmonic distortion and intermodulation (IMD) generated by the at least one first type of carrier.

Example User Equipment and Network Node

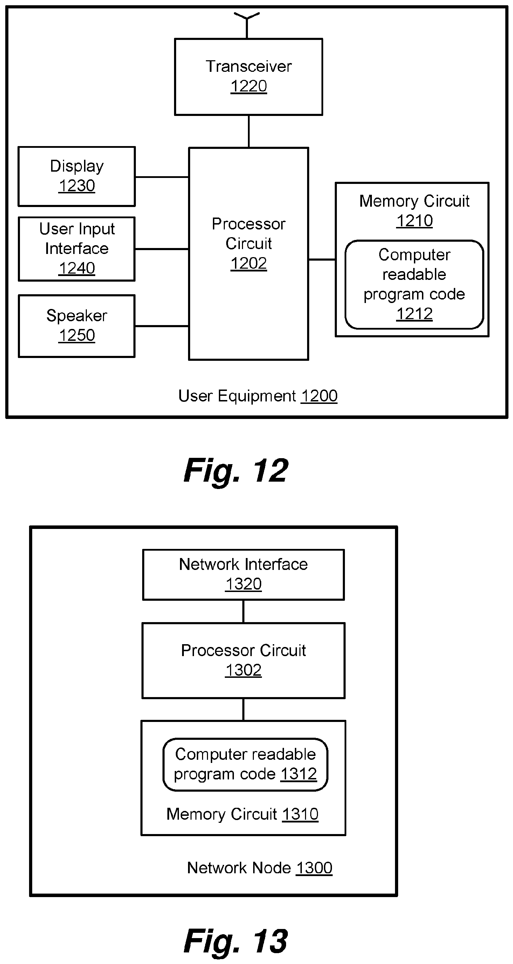

Figure 12 is a block diagram of a UE 1200, for use in a telecommunications system, that is configured to perform operations according to one or more embodiments disclosed herein. The UE 1200 includes a transceiver circuit 1220, a processor circuit 1202, and a memory circuit 1210 containing computer readable program code 1212. The UE 1200 may further include a display 1230, a user input interface 1240, and a speaker 1250.

The transceiver 1220 is configured to communicate with network nodes and may communicate with other UEs, through a wireless air interface using one or more of the radio access technologies disclosed herein. The processor circuit 1202 may include one or more data processing circuits, such as a general purpose and/or special purpose processor, e.g., microprocessor and/or digital signal processor. The processor circuit 1202 is configured to execute the computer readable program code 1212 in the memory circuit 1210 to perform at least some of the operations described herein as being performed by a UE, or more generally a first network node.

Figure 13 is a block diagram of a network node 1300, for use in a telecommunications system, that is configured according to one or more embodiments disclosed herein for a network node. The network node 1300 may correspond to the first network node configured according to at least one embodiment disclosed herein. The network node 1300 can include a network interface 1320 (e.g., wired network interface and/or wireless transceiver), a processor circuit 1302, and a memory circuit 1310 containing computer readable program code 1312.

The processor circuit 1302 may include one or more data processing circuits, such as a general purpose and/or special purpose processor, e.g., microprocessor and/or digital signal processor, that may be collocated or distributed across one or more networks. The processor circuit 1302 is configured to execute the computer readable program code 1312 in the memory 1310 to perform at least some of the operations and methods of described herein as being performed by a network node. The network interface 1320 communicates with a UE, another network node, and/or a core network.

Example Modules in an Electronic Communication Device

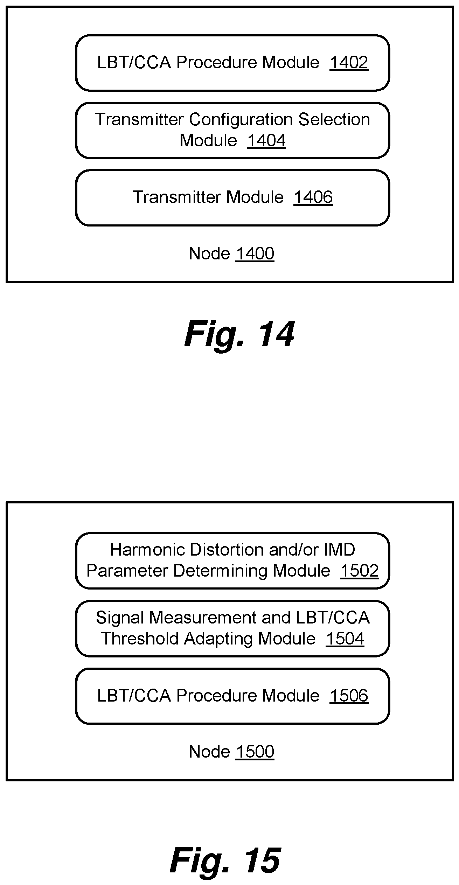

Figure 14 illustrates modules residing in a first node 1400 that perform operations as disclosed herein according to some embodiments. The first node 1400 includes a LBT/CCA procedure module 1402, a transmitter configuration selection module 1404, and a transmitter module 1406. The LBT/CCA procedure module 1402 performs a LBT/CCA procedure on at least one second type of carrier prior to transmission of signals on the at least one second type of carrier. The transmitter configuration selection module 1404 selects, based on the result of the LBT/CCA procedure, between one of a first transmitter configuration and a second transmitter configuration for transmitting signals on at least one first type of carrier. The transmitter module 1406 transmits signals through a transceiver circuit on the at least one first type of carrier using the one of the first transmitter configuration and the second transmitter configuration that was selected.

Figure 1500 illustrates modules residing in another first node 1500 that perform operations as disclosed herein according to some embodiments. The first node 1500 includes a harmonic distortion and/or IMD parameter determining module 1502, a signal measurement and LBT/CCA threshold adapting module 1504, and a LBT/CCA procedure module 1506. The harmonic distortion and/or IMD parameter determining module 1502 determines a parameter defining harmonics and/or inter-modulation distortion, IMD, generated due to transmission of signals by at least one first type of carrier into at least one second type of carrier. The signal measurement and LBT/CCA threshold adapting module 1504 adapts at least one of a signal measurement and a LBT/CCA threshold used for performing a LBT/CCA procedure on at least one second type of carrier for deciding whether to transmit a signal or not on the at least one second type of carrier. The LBT/CCA procedure module 1506 uses the adapted value of the at least one of the signal measurement and the LBT threshold for performing the LBT procedure on the at least one second type of carrier.

Abbreviations and Explanations:

| | |
|---|---|
| A-MPR | Additional Maximum Power Reduction |
| BS | Base Station |
| BTS | Base Transceiver Station |
| CA | Carrier Aggregation |
| CC | Component Carrier |
| CCA | Clear Channel Assessment |
| CDMA | Code Division Multiple Access |
| CSMA | Carrier Sense Multiple Access |
| DAS | Distributed Antenna Systems |
| DC | Dual Connectivity |

| | |
|---|---|
| D2D | Device-to-Device |
| DL | Downlink |
| FD | Full Duplex |
| FDD | Frequency Division Duplex |
| FD-E-PHR | Full Duplex Extended Power Headroom Report(ing) |
| GNSS | Global navigational satellite system |
| HD | Half Duplex |
| IE | Information Element |
| LAA | Licensed-Assisted Access |
| LBT | Listen before talk |
| LEE | Laptop Embedded Equipped |
| LME | Laptop Mounted Equipment |
| LTE | Long Term Evolution |
| LTE-U | LTE in Unlicensed Band(s) |
| MS | Mode Switching |
| MCS | Modulation and Coding Scheme |
| MCG | Master Cell Group |
| MeNB | Master eNB |
| M2M | Machine-to-Machine |
| MPR | Maximum Power Reduction |
| NW | Network |
| OOB | Out-of-Band |
| PCell | Primary Cell |
| PCRF | Policy Control and Resource Function |
| PDA | Personal Digital Assistant |
| PDCCH | PHY Downlink Control Channel |
| PH | Power headroom |
| PHR | PH reporting |
| PHY | Physical |
| PRB | PHY resource block |
| PSD | power spectral density |
| QoS | Quality of Service |
| RA | Resource Allocation |
| RAN | Radio Access Network |
| RB | Resource block |
| RRH | Remote Radio Head |
| RSSI | Received Signal Strength Indicator |
| SCell | Secondary Cell |
| SCG | Secondary Cell Group |
| SeNB | Secondary eNB |
| SI | Self-Interference |
| SNR | Signal-to-Noise Ratio |
| SINR | Signal to Interference Plus Noise Ratio |
| SSIR | Signal to Self-Interference Ratio |
| TDD | Time Division Duplex |
| TTI | Transmission Time Interval |
| UE | User Equipment |
| UL | Uplink |
| USB | Universal Serial Bus |
| WCDMA | Wideband Code Division Multiple Access |
| X2AP | X2 Application Protocol |

Listing of Various Embodiments:

Embodiment 1. A method by a first node (1200, 1300) of a telecommunications system, the method comprising:

performing (700) a listen-before-talk, LBT, procedure on at least one second type of carrier prior to transmission of signals on the at least one second type of carrier;
selecting (702), based on the result of the LBT procedure, between one of a first transmitter configuration and a second transmitter configuration for transmitting signals on at least one first type of carrier; and
transmitting (704) signals through a transceiver (1220, 1320) on the at least one first type of carrier using the one of the first transmitter configuration and the second transmitter configuration that was selected.

Embodiment 2. The method of Embodiment 1, wherein the selecting (702) comprises:

determining (900) whether the LBT procedure failed on the second type of carrier;
responsive to determining the LBT procedure failed on the second type of carrier, selecting (902) the first transmitter configuration for transmitting signals on the at least one first type of carrier; and
responsive to determining the LBT procedure is successful on the second type of carrier, selecting (904) the second transmitter configuration for transmitting signals on the at least one first type of carrier.

Embodiment 3. The method of any of Embodiments 1 to 2, wherein the selecting (702) comprises:

determining (1000) whether signal measurement during a LBT procedure applied for the second type of carrier is above a LBT threshold;
responsive to determining (1000) that the signal measurement during the LBT procedure applied for the second type of carrier is above the LBT threshold, selecting (1000) the first transmitter configuration for transmitting signals on the at least one first type of carrier; and
responsive to determining (1000) that the signal measurement during the LBT procedure applied for the second type of carrier is not above the LBT threshold, selecting (1002) the second transmitter configuration for transmitting signals on the at least one first type of carrier.

Embodiment 4. The method of Embodiment 3, wherein the signal measurement comprises at least one of:
RSSI, signal strength, preamble detection or reference signal detection, total received, and measurement power including noise.
Embodiment 5. The method of any of Embodiments 1 to 4, wherein the first and second transmitter configurations comprise at least one of:
transmit power of signals, number of physical channels, location of physical channels within the bandwidth of the first type of carrier, and transport format of signals.
Embodiment 6. The method of any of Embodiments 1 to 5, wherein the first transmitter configuration has more restricted constraint on the transmission of signals than the second transmitter configuration.
Embodiment 7. The method of any of Embodiments 1 to 6, wherein the first node selects (702) a first transmission power level (P1) in the first transmitter configuration responsive to when the LBT procedure fails on the second type of carrier, and selects (702) a second transmission power level (P2) in the second transmitter configuration responsive to when the LBT procedure fails on the second type of carrier, wherein the first transmission power level (P1) is less than the second transmission power level (P1).
Embodiment 8. The method of any of Embodiments 1 to 7, wherein the first node selects (702) a first number of physical channels (C1) in the first transmitter configuration responsive to when the LBT procedure fails on the second type of carrier, and selects (702) a second number of physical channels (C2) in the second transmitter configuration responsive to when the LBT procedure is successful on the second type of carrier, wherein the first number of physical channels (C1) is less than the second number of physical channels (C2).
Embodiment 9. The method of any of Embodiments 1 to 8, wherein the first node selects (702) a modulation type of first order M1 in the first transmitter configuration responsive to when the LBT procedure fails on the second type of carrier, and selects (702) a modulation type of second order M2 in the second transmitter configuration responsive to when the LBT procedure is successful on the second type of carrier, wherein the modulation type of first order M1 is less than the modulation type of second order M2.
Embodiment 10. The method of any of Embodiments 1 to 9, wherein the first node selects (702) a first transport block or data block of first length D1 in the first transmitter configuration responsive to when the LBT procedure fails on the second type of carrier, and selects (702) a second transport block or data block of second length D2 in the second transmitter configuration responsive to when LBT procedure is successful on the second type of carrier, wherein the first length D1 is less than the second length D2.
Embodiment 11. The method of any of Embodiments 1 to 10, further comprising:

determining (1100) whether the LBT procedure failed on the second type of carrier;

responsive to determining (1100) the LBT procedure (700) failed on the second type of carrier, not transmitting (1102) any signal through the transceiver circuit on the at least one first type of carrier using the first transmitter configuration; and

responsive to determining (1100) the LBT procedure (700) is successful on the second type of carrier, transmitting (1104) one or more signals through the transceiver circuit on the at least one first type of carrier in the second transmitter configuration.

Embodiment 12. The method of any of Embodiments 1 to 11, further comprising:
responsive to determining the LBT procedure (700) failed on the second type of carrier belonging to band z, controlling the transmit power of signals on one or more first type of carriers belonging to band x to be reduced below a threshold level.

Embodiment 13. The method of any of Embodiments 1 to 12, further comprising:
responsive to determining the LBT procedure (700) failed on the second type of carrier belonging to band z, controlling the transmit power of signals on one or more first type of carriers belonging to band x and/or band y to be reduced below their respective threshold levels.

Embodiment 14. The method of any of Embodiments 1 to 13, further comprising:
responsive to determining the LBT procedure (700) failed on the second type of carrier belonging to band z, controlling the number of physical channels for transmission in one or more first type of carriers to be reduced in band x, band y, or in both bands x and y below their respective threshold levels.

Embodiment 15. The method of any of Embodiments 1 to 14, further comprising:
dropping or discarding the transmission of signals on at least one of the first type of carriers responsive to occurrence of a defined condition associated with the at least one second type of carrier.

Embodiment 16. The method of any of Embodiments 1 to 15, further comprising:
operating the first node to drop or discard the transmission of signals on at least one of the first type of carriers responsive to occurrence of all of the following conditions:

the first node determining the LBT procedure (700) failed on the at least one second type of carrier;
the first node is configured with more than one first type of carriers for transmission of signals; and
transmissions of signals on more than one first type of carriers are scheduled.

Embodiment 17. A first node configured to perform the method of any of Embodiments 1 to 16.

Embodiment 18. A method by a first node of a telecommunications system, the method comprising:

determining (800) a parameter defining harmonics and/or inter-modulation distortion, IMD, generated due to transmission of signals by at least one first type of carrier into at least one second type of carrier;

adapting (802) at least one of a signal measurement and a listen-before-talk, LBT, threshold used for performing a LBT procedure on at least one second type of carrier for deciding whether to transmit a signal or not on the at least one second type of carrier; and

using (804) the adapted value of the at least one of the signal measurement and the LBT threshold for performing the LBT procedure on the at least one second type of carrier.

Embodiment 19. The method of Embodiment 18, wherein the first node performs the method of any of Embodiments 1-16.

Embodiment 20. A first node (1200, 1300) of a telecommunications system, the first node comprising:

a transceiver (1220);
a memory (1210) storing computer readable program code (1212); and
a processor connected to the transceiver (1220) and the memory (1210) to execute the computer readable program code (1212) to:

perform (700) a listen-before-talk, LBT, procedure on at least one second type of carrier prior to transmission of signals on the at least one second type of carrier;

select (702), based on the result of the LBT procedure, between one of a first transmitter configuration and a second transmitter configuration for transmitting signals on at least one first type of carrier; and

transmit (704) signals through the transceiver (1220) on the at least one first type of carrier using the one of the first transmitter configuration and the second transmitter configuration that was selected.

Embodiment 21. The first node (1200, 1300) of Embodiment 20, wherein the processor further executes the computer readable program code (1212) to perform the method of any of Embodiments 1 to 16.

Embodiment 22. A first node (1200, 1300) of a telecommunications system, the first node comprising:

a transceiver (1220);
a memory (1210) storing computer readable program code (1212); and
a processor connected to the transceiver (1220) and the memory (1210) to execute the computer readable program code (1212) to:

determine (800) a parameter defining harmonics and/or inter-modulation distortion, IMD, generated due to transmission of signals by at least one first type of carrier into at least one second type of carrier;
adapt (802) at least one of a signal measurement and a listen-before-talk, LBT, threshold used for performing a LBT procedure on at least one second type of carrier for deciding whether to transmit a signal or not on the at least one second type of carrier; and
use (804) the adapted value of the at least one of the signal measurement and the LBT threshold for performing the LBT procedure on the at least one second type of carrier.

Embodiment 23. The first node (1200, 1300) of Embodiment 22, wherein the processor further executes the computer readable program code (1212) to perform the method of any of Embodiments 1 to 16.

Further Definitions and Embodiments:

In the above-description of various embodiments of the present disclosure, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

As used herein, the terms "comprise", "comprising", "comprises", "include", "including", "includes", "have", "has", "having", or variants thereof are open-ended, and include one or more stated features, integers, elements, steps, components or functions but does not preclude the presence or addition of one or more other features, integers, elements, steps, components, functions or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/BlueRay).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present disclosure may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated. Moreover, although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of various example combinations and subcombinations of embodiments and of the manner and process of making and using them, and shall support claims to any such combination or subcombination.

The scope of the present invention is solely limited by the appended claims.

## Claims

1. A method by a first node of a wireless telecommunications system, the method comprising:

   determining (800, 810) a parameter defining harmonic distortion and/or inter-modulation distortion, IMD, on a second type of carrier due to transmission of signals on a first type of carrier, wherein the first and second types of carrier are aggregated component carriers and wherein the first type of carrier is a carrier with contention free access and the second type of carrier is a carrier with contention based access;
   adapting (802, 812) at least one of a signal measurement and a clear channel assessment, CCA, threshold used for performing a CCA procedure on the second type of carrier for deciding whether to transmit a signal or not on the second type of carrier, based on the parameter; and
   performing (804, 814) the CCA procedure on the second type of carrier using the adapted at least one of the signal measurement and the CCA threshold to decide whether to transmit a signal or not on the second type of carrier.

2. The method of Claim 1, further comprising deciding whether to transmit a signal or not on the first type of carrier without performing the CCA procedure on the first type of carrier using the adapted at least one of the signal measurement and the CCA threshold.

3. The method of Claim 1, further comprising deciding whether to transmit a signal or not on the first type of carrier by performing the CCA procedure on the first type of carrier using the adapted at least one of the signal measurement and the CCA threshold.

4. The method of any of Claims 1 to 3,
   further comprising:

   selecting (702, 712), based on a result of the CCA procedure, between one of a first transmitter configuration and a second transmitter configuration for transmitting signals on a first type of carrier; and

transmitting (704, 714) signals through a transceiver (1220, 1320) on the first type of carrier using the one of the first transmitter configuration and the second transmitter configuration that was selected.

**5.** The method of Claim 4, wherein the selecting (702, 714) comprises:

determining (900, 910) whether the CCA procedure failed on the second type of carrier;
responsive to determining the CCA procedure failed on the second type of carrier, selecting (902, 912) the first transmitter configuration for transmitting signals on the first type of carrier; and
responsive to determining the CCA procedure is successful on the second type of carrier, selecting (904, 914) the second transmitter configuration for transmitting signals on the first type of carrier.

**6.** The method of any of Claims 4 to 5, wherein the selecting (702, 712) comprises:

determining (1000, 1010) whether signal measurement during the CCA procedure applied for the second type of carrier is above a CCA threshold;
responsive to determining (1000, 1010) that the signal measurement during the CCA procedure applied for the second type of carrier is above the CCA threshold, selecting (1002, 1012) the first transmitter configuration for transmitting signals on the first type of carrier; and
responsive to determining (1000, 1010) that the signal measurement during the CCA procedure applied for the second type of carrier is not above the CCA threshold, selecting (1004, 1014) the second transmitter configuration for transmitting signals on the first type of carrier.

**7.** The method of any of Claims 4 to 6, wherein the first node selects (702, 712) a first transmission power level (P1) in the first transmitter configuration responsive to when the CCA procedure fails on the second type of carrier, and selects (702, 712) a second transmission power level (P2) in the second transmitter configuration responsive to when the CCA procedure fails on the second type of carrier, wherein the first transmission power level (P1) is less than the second transmission power level (P1).

**8.** The method of any of Claims 4 to 7, wherein the first node selects (702, 712) a modulation type of first order M1 in the first transmitter configuration responsive to when the CCA procedure fails on the second type of carrier, and selects (702, 712) a modulation type of second order M2 in the second transmitter configuration responsive to when the CCA procedure is successful on the second type of carrier, wherein the modulation type of first order M1 is less than the modulation type of second order M2.

**9.** The method of any of Claims 4 to 8, wherein the first node selects (702, 712) a first transport block or data block of first length D1 in the first transmitter configuration responsive to when the CCA procedure fails on the second type of carrier, and selects (702, 712) a second transport block or data block of second length D2 in the second transmitter configuration responsive to when the CCA procedure is successful on the second type of carrier, wherein the first length D1 is less than the second length D2.

**10.** The method of any of Claims 4 to 9, further comprising:

determining (1100, 1110) whether the CCA procedure failed on the second type of carrier;
responsive to determining (1100, 1110) the CCA procedure (700, 710) failed on the second type of carrier, not transmitting (1102, 1112) any signal through the transceiver (1220, 1320) on the first type of carrier using the first transmitter configuration; and
responsive to determining (1100, 1110) the CCA procedure (700, 710) is successful on the second type of carrier, transmitting (1104, 1114) one or more signals through the transceiver (1220, 1320) on the first type of carrier in the second transmitter configuration.

**11.** The method of any of Claims 4 to 10, further comprising:
responsive to determining the CCA procedure (700, 710) failed on the second type of carrier belonging to band z, controlling the transmit power of signals on one or more first type of carriers belonging to band x to be reduced below a threshold level.

**12.** The method of any of Claims 4 to 11, further comprising:
responsive to determining the CCA procedure (700, 710) failed on the second type of carrier belonging to band z, controlling the transmit power of signals on one or more first type of carriers belonging to band x and/or band y to be reduced below their respective threshold levels.

**13.** The method of any of Claims 4 to 12, further comprising:
responsive to determining the CCA procedure (700, 710) failed on the second type of carrier belonging to band z, controlling the number of physical channels for transmission in one or more first type of carriers to be reduced in band x, band y, or in both bands x and y below their respective threshold levels.

**14.** A computer program product comprising a non-transitory computer readable medium storing program code that when executed by a processor (1202, 1302) of a first node (1200, 1300) causes the first node (1200, 1300) to perform operations of the method of any of Claims 1 to 13.

**15.** A first node (1200, 1300) for a wireless telecommunications system, the first node being configured to:

determine a parameter defining harmonic distortion and/or inter-modulation distortion, IMD, on a second type of carrier due to transmission of signals on a first type of carrier, wherein the first and second types of carrier are aggregated component carriers and wherein the first type of carrier is a carrier with contention free access and the second type of carrier is a carrier with contention based access;
adapt at least one of a signal measurement and a CCA threshold used for performing a CCA procedure on the second type of carrier for deciding whether to transmit a signal or not on the second type of carrier, based on the parameter; and
perform the CCA procedure on the second type of carrier using the adapted at least one of the signal measurement and the CCA threshold to decide whether to transmit a signal or not on the second type of carrier.

## Patentansprüche

**1.** Verfahren durch einen ersten Knoten eines drahtlosen Telekommunikationssystems, wobei das Verfahren Folgendes umfasst:

Bestimmen (800, 810) eines Parameters, der harmonische Verzerrung und/oder Intermodulationsverzerrung, IMD, auf einer zweiten Art von Träger aufgrund der Übertragung von Signalen auf einer ersten Art von Träger definiert, wobei die erste und die zweite Art von Träger ein Träger mit konkurrenzfreiem Zugriff sind und die zweite Art von Träger ein Träger mit konkurrenzbasiertem Zugriff ist;
Anpassen (802, 812) mindestens eines von einem Signalmessungsschwellenwert und einem Schwellenwert für die eindeutige Kanalbewertung, CCA, der zum Durchführen einer CCA-Prozedur auf der zweiten Art von Träger verwendet wird, um zu entscheiden, ob auf der zweiten Art von Träger ein Signal zu übertragen ist oder nicht, basierend auf dem Parameter; und
Durchführen (804, 814) der CCA-Prozedur auf der zweiten Art von Träger unter Verwendung des angepassten mindestens einen von dem Signalmessungs- und dem CCA-Schwellenwert, um zu entscheiden, ob ein Signal auf der zweiten Art von Träger übertragen werden soll oder nicht.

**2.** Verfahren nach Anspruch 1, das ferner das Entscheiden umfasst, ob ein Signal auf dem ersten Art von Träger übertragen werden soll oder nicht, ohne die CCA-Prozedur auf der ersten Art von Träger unter Verwendung des angepassten mindestens einem von dem Signalmessungsschwellenwert und dem CCA-Schwellwert durchzuführen.

**3.** Verfahren nach Anspruch 1, das ferner das Entscheiden umfasst, ob ein Signal auf die erste Art von Träger übertragen werden soll oder nicht, unter Durchführung der CCA-Prozedur auf der ersten Art von Träger unter Verwendung des angepassten mindestens einen von dem Signalmessungs- und dem CCA-Schwellwert.

**4.** Verfahren nach einem der Ansprüche 1 bis 3,
ferner umfassend:

Auswählen (702, 712), basierend auf einem Ergebnis der CCA-Prozedur, zwischen einer ersten Senderkonfiguration und einer zweiten Senderkonfiguration zum Übertragen von Signalen auf einer ersten Art von Träger; und
Übertragen von Signalen (704, 714) durch einen Sender-Empfänger (1320, 1220) auf die erste Art von Träger unter Verwendung des einen von der ersten Senderkonfiguration und der zweiten Senderkonfiguration, die ausgewählt wurde.

**5.** Verfahren nach Anspruch 4, wobei das Auswählen (702, 714) Folgendes umfasst:

Bestimmen (900, 910), ob die CCA-Prozedur auf der zweiten Art von Träger fehlgeschlagen ist;
als Reaktion auf das Bestimmen, dass die CCA-Prozedur auf der zweiten Art von Träger fehlgeschlagen ist, Auswählen (902, 912) der ersten Senderkonfiguration zum Übertragen von Signalen auf der ersten Art von Träger; und
als Reaktion auf das Bestimmen, dass die CCA-Prozedur auf der zweiten Art von Träger erfolgreich ist, Auswählen (904, 914) der zweiten Senderkonfiguration zum Übertragen von Signalen auf der ersten Art von Träger.

**6.** Verfahren nach einem der Ansprüche 4 bis 5, wobei das Auswählen (702, 712) Folgendes umfasst:

Bestimmen (1000, 1010), ob die Signalmessung während der CCA-Prozedur, die für die zweite Art von Träger angewendet wird, über einem CCA-Schwellenwert liegt;
als Reaktion auf das Bestimmen (1000, 1010), dass die Signalmessung während der CCA-Prozedur, die für die zweite Art von Träger angewendet wird, über dem CCA-Schwellenwert liegt, Auswählen (1002, 1012) der ersten Senderkonfiguration zum Übertragen von Signalen auf der ersten Art von Träger; und
und als Reaktion auf das Bestimmen (1000, 1010), dass die Signalmessung während der CCA-Prozedur, die für die zweite Art von Träger angewendet wird, nicht über dem CCA-Schwellenwert liegt, Auswählen (1004, 1014) der zweiten Senderkonfiguration zum Übertragen von Signalen auf der ersten Art von Träger.

**7.** Verfahren nach einem der Ansprüche 4 bis 6, wobei der erste Knoten einen ersten Sendeleistungspegel (P1) in der ersten Senderkonfiguration als Reaktion darauf auswählt (702, 712), wenn die CCA-Prozedur auf der zweiten Art von Träger fehlschlägt, und einen zweiten Sendeleistungspegel (P2) in der zweiten Senderkonfiguration als Reaktion darauf auswählt (702, 712), wenn die CCA-Prozedur auf der zweiten Art von Träger fehlschlägt, wobei der erste Sendeleistungspegel (P1) kleiner als der zweite Sendeleistungspegel (P1) ist.

**8.** Verfahren nach einem der Ansprüche 4 bis 7, wobei der erste Knoten einen Modulationstyp erster Ordnung M1 in der ersten Senderkonfiguration als Reaktion darauf auswählt (702, 712), wenn die CCA-Prozedur auf der zweiten Art von Träger fehlschlägt, und einen Modulationstyp zweiter Ordnung M2 in der zweiten Senderkonfiguration als Reaktion darauf auswählt (702, 712), wenn die CCA-Prozedur auf der zweiten Art von Träger erfolgreich ist, wobei der Modulationstyp erster Ordnung M1 kleiner als der Modulationstyp zweiter Ordnung M2 ist.

**9.** Verfahren nach einem der Ansprüche 4 bis 8, wobei der erste Knoten einen ersten Transportblock oder Datenblock der ersten Länge D1 in der ersten Senderkonfiguration auswählt (702, 712), als Reaktion darauf, wann die CCA-Prozedur auf der zweiten Art von Träger fehlschlägt, und einen zweiten Transportblock oder Datenblock der zweiten Länge D2 in der zweiten Senderkonfiguration auswählt (702, 712), als Reaktion darauf, wenn die CCA-Prozedur auf der zweiten Art von Träger erfolgreich ist, wobei die erste Länge D1 kleiner als die zweite Länge D2 ist.

**10.** Verfahren nach einem der Ansprüche 4 bis 9, ferner umfassend:

Bestimmen (1100, 1110), ob die CCA-Prozedur auf der zweiten Art von Träger fehlgeschlagen ist;
als Reaktion auf das Bestimmen (1100, 1110), dass die CCA-Prozedur (700, 710) auf der zweiten Art von Träger fehlgeschlagen ist, unter Verwendung der ersten Senderkonfiguration kein Signal über den Sender-Empfänger (1220, 1320) auf die erste Art von Träger zu senden (1102, 1112); und
als Reaktion auf das Bestimmen (1100, 1110), dass die CCA-Prozedur (700, 710) auf der zweiten Art von Träger erfolgreich ist, unter Verwendung der zweiten Senderkonfiguration ein oder mehrere Signale über den Sender-Empfänger (1220, 1320) auf die erste Art von Träger zu senden (1104, 1114).

**11.** Verfahren nach einem der Ansprüche 4 bis 10, ferner umfassend:
als Reaktion auf das Bestimmen, dass die CCA-Prozedur (700, 710) auf der zweiten Art von Träger, der zu dem Band z gehört, fehlgeschlagen ist, Steuern der Sendeleistung von Signalen auf einer oder mehreren der ersten Art von Trägern, die zu dem Band x gehören, um unter einen Schwellenwertpegel reduziert zu werden.

**12.** Verfahren nach einem der Ansprüche 4 bis 11, ferner umfassend:
als Reaktion auf das Bestimmen, dass die CCA-Prozedur (700, 710) auf der zweiten Art von Träger, der zu dem Band z gehört, fehlgeschlagen ist, Steuern der Sendeleistung von Signalen auf einer oder mehreren der ersten Art von Trägern, die zu dem Band x und/oder dem Band y gehören, um unter einen entsprechenden Schwellenwertpegel reduziert zu werden.

13. Verfahren nach einem der Ansprüche 4 bis 12, ferner umfassend: als Reaktion auf das Bestimmen, dass die CCA-Prozedur (700, 710) auf der zweiten Art von Träger, der zu dem Band z gehört, fehlgeschlagen ist, Steuern der Anzahl physischer Kanäle zur Übertragung in einer oder mehreren der ersten Art von Trägern, die in Band x, Band y oder in beiden Bändern x und y unter ihren jeweiligen Schwellenwertpegeln reduziert werden.

14. Computerprogrammprodukt umfassend ein nicht flüchtiges computerlesbares Medium, das Programmcode speichert, der, wenn er von einem Prozessor (1202, 1302) eines ersten Knotens (1200, 1300) ausgeführt wird, den ersten Knoten (1200, 1300) veranlasst, Operationen des Verfahrens nach einem der Ansprüche 1 bis 13 auszuführen.

15. Erster Knoten (1200, 1300) für ein drahtloses Telekommunikationssystem, wobei der erste Knoten konfiguriert ist, um:

einen Parameter zu bestimmen, der harmonische Verzerrung und/oder Intermodulationsverzerrung, IMD, auf einer zweiten Art von Träger aufgrund einer Übertragung von Signalen auf einer ersten Art von Träger definiert, wobei die erste und die zweite Art von Träger aggregierte Komponententräger sind und wobei die erste Art von Träger ein Träger mit konkurrenzfreiem Zugriff ist und die zweite Art von Träger ein Träger mit konkurrenzbasiertem Zugriff ist;
mindestens einen von einem Signalmessungs- und einem CCA-Schwellenwert anzupassen, der zum Durchführen einer CCA-Prozedur auf der zweiten Art von Träger verwendet wird, um zu entscheiden, ob auf der zweiten Art von Träger ein Signal zu übertragen ist oder nicht, basierend auf dem Parameter; und
die CCA-Prozedur auf der zweiten Art von Träger unter Verwendung des angepassten mindestens einen von dem Signalmessungs- und dem CCA-Schwellenwert durchzuführen, um zu entscheiden, ob ein Signal auf der zweiten Art von Träger übertragen werden soll oder nicht.

**Revendications**

1. Procédé par un premier noeud d'un système de télécommunications sans fil, le procédé comprenant :

la détermination (800, 810) d'un paramètre définissant une distorsion harmonique et/ou une distorsion d'intermodulation, IMD, sur un deuxième type de porteuse en raison de la transmission de signaux sur un premier type de porteuse, dans lequel les premier et deuxième types de porteuse sont des porteuses composantes agrégées et dans lequel le premier type de porteuse est une porteuse avec accès sans contention et le deuxième type de porteuse est une porteuse avec un accès basé sur une contention ;
l'adaptation (802, 812) d'au moins l'un parmi une mesure de signal et un seuil d'évaluation de canal dégagé, CCA, utilisé pour mettre en oeuvre une procédure CCA sur le deuxième type de porteuse pour décider s'il faut ou non transmettre un signal sur le deuxième type de porteuse, sur la base du paramètre ; et
la mise en oeuvre (804, 814) de la procédure CCA sur le deuxième type de porteuse en utilisant cet au moins un adapté parmi la mesure de signal et le seuil CCA pour décider s'il faut ou non transmettre un signal sur le deuxième type de porteuse.

2. Procédé selon la revendication 1, comprenant en outre le fait de décider s'il faut ou non transmettre un signal sur le premier type de porteuse sans mettre en oeuvre la procédure CCA sur le premier type de porteuse en utilisant cet au moins un adapté parmi la mesure de signal et le seuil CCA.

3. Procédé selon la revendication 1, comprenant en outre le fait de décider s'il faut ou non transmettre un signal sur le premier type de porteuse en mettant en oeuvre la procédure CCA sur le premier type de porteuse en utilisant cet au moins un adapté parmi la mesure de signal et le seuil CCA.

4. Procédé selon l'une quelconque des revendications 1 à 3, comprenant en outre :

la sélection (702, 712), sur la base d'un résultat de la procédure CCA, entre l'une parmi une première configuration d'émetteur et une deuxième configuration d'émetteur pour transmettre des signaux sur un premier type de porteuse ; et
la transmission (704, 714) de signaux par l'intermédiaire d'un émetteur-récepteur (1220, 1320) sur le premier type de porteuse en utilisant celle parmi la première configuration d'émetteur et la deuxième configuration d'émetteur qui a été sélectionnée.

**5.** Procédé selon la revendication 4, dans lequel la sélection (702, 714) comprend :

le fait de déterminer (900, 910) si la procédure CCA a échoué sur le deuxième type de porteuse ;
en réponse à la détermination que la procédure CCA a échoué sur le deuxième type de porteuse, la sélection (902, 912) de la première configuration d'émetteur pour transmettre des signaux sur le premier type de porteuse ; et
en réponse à la détermination que la procédure CCA est couronnée de succès sur le deuxième type de porteuse, la sélection (904, 914) de la deuxième configuration d'émetteur pour transmettre des signaux sur le premier type de porteuse.

**6.** Procédé selon l'une quelconque des revendications 4 à 5, dans lequel la sélection (702, 712) comprend :

le fait de déterminer (1000, 1010) si la mesure de signal pendant la procédure CCA appliquée pour le deuxième type de porteuse est supérieure à un seuil CCA ;
en réponse à la détermination (1000, 1010) que la mesure de signal pendant la procédure CCA appliquée pour le deuxième type de porteuse est supérieure au seuil CCA, la sélection (1002, 1012) de la première configuration d'émetteur pour transmettre des signaux sur le premier type de porteuse ; et
en réponse à la détermination (1000, 1010) que la mesure de signal pendant la procédure CCA appliquée pour le deuxième type de porteuse n'est pas supérieure au seuil CCA, la sélection (1004, 1014) de la deuxième configuration d'émetteur pour transmettre des signaux sur le premier type de porteuse.

**7.** Procédé selon l'une quelconque des revendications 4 à 6, dans lequel le premier noeud sélectionne (702, 712) un premier niveau de puissance de transmission (P1) dans la première configuration d'émetteur en réponse au moment où la procédure CCA échoue sur le deuxième type de porteuse, et sélectionne (702, 712) un deuxième niveau de puissance de transmission (P2) dans la deuxième configuration d'émetteur en réponse au moment où la procédure CCA échoue sur le deuxième type de porteuse, dans lequel le premier niveau de puissance de transmission (P1) est inférieur au deuxième niveau de puissance de transmission (P1).

**8.** Procédé selon l'une quelconque des revendications 4 à 7, dans lequel le premier noeud sélectionne (702, 712) un type de modulation de premier ordre M1 dans la première configuration d'émetteur en réponse au moment où la procédure CCA échoue sur le deuxième type de porteuse, et sélectionne (702, 712) un type de modulation de deuxième ordre M2 dans la deuxième configuration d'émetteur en réponse au moment où la procédure CCA est couronnée de succès sur le deuxième type de porteuse, dans lequel le type de modulation de premier ordre M1 est inférieur au type de modulation de deuxième ordre M2.

**9.** Procédé selon l'une quelconque des revendications 4 à 8, dans lequel le premier noeud sélectionne (702, 712) un premier bloc de transport ou bloc de données de première longueur D1 dans la première configuration d'émetteur en réponse au moment où la procédure CCA échoue sur le deuxième type de porteuse, et sélectionne (702, 712) un deuxième bloc de transport ou bloc de données de deuxième longueur D2 dans la deuxième configuration d'émetteur en réponse au moment où la procédure CCA est couronnée de succès sur le deuxième type de porteuse, dans lequel la première longueur D1 est inférieure à la deuxième longueur D2.

**10.** Procédé selon l'une quelconque des revendications 4 à 9, comprenant en outre :

le fait de déterminer (1100, 1110) si la procédure CCA a échoué sur le deuxième type de porteuse ;
en réponse à la détermination (1100, 1110) que la procédure CCA (700, 710) a échoué sur le deuxième type de porteuse, la non-transmission (1102, 1112) d'un quelconque signal par l'intermédiaire de l'émetteur-récepteur (1220, 1320) sur le premier type de porteuse en utilisant la première configuration d'émetteur ; et
en réponse à la détermination (1100, 1110) que la procédure CCA (700, 710) est couronnée de succès sur le deuxième type de porteuse, la transmission (1104, 1114) d'un ou plusieurs signaux par l'intermédiaire de l'émetteur-récepteur (1220, 1320) sur le premier type de porteuse dans la deuxième configuration d'émetteur.

**11.** Procédé selon l'une quelconque des revendications 4 à 10, comprenant en outre :
en réponse à la détermination que la procédure CCA (700, 710) a échoué sur le deuxième type de porteuse appartenant à une bande z, la commande de la puissance de transmission de signaux sur un ou plusieurs premiers types de porteuse appartenant à une bande x afin qu'elle soit réduite en dessous d'un niveau seuil.

**12.** Procédé selon l'une quelconque des revendications 4 à 11, comprenant en outre :

en réponse à la détermination que la procédure CCA (700, 710) a échoué sur le deuxième type de porteuse appartenant à une bande z, la commande de la puissance de transmission de signaux sur un ou plusieurs premiers types de porteuse appartenant à une bande x et/ou une bande y afin qu'elle soit réduite en dessous de leurs niveaux seuils respectifs.

**13.** Procédé selon l'une quelconque des revendications 4 à 12, comprenant en outre :
en réponse à la détermination que la procédure CCA (700, 710) a échoué sur le deuxième type de porteuse appartenant à une bande z, la commande du nombre de canaux physiques pour transmission dans un ou plusieurs premiers types de porteuse afin qu'il soit réduit dans la bande x, la bande y, ou dans l'une et l'autre des bandes x et y en dessous de leurs niveaux seuils respectifs.

**14.** Produit programme informatique comprenant un support non transitoire lisible par un ordinateur stockant un code de programme qui lorsqu'il est exécuté par un processeur (1202, 1302) d'un premier noeud (1200, 1300) amène le premier noeud (1200, 1300) à mettre en oeuvre des opérations du procédé selon l'une quelconque des revendications 1 à 13.

**15.** Premier noeud (1200, 1300) pour un système de télécommunications sans fil, le premier noeud étant configuré pour :

déterminer un paramètre définissant une distorsion harmonique et/ou une distorsion d'inter-modulation, IMD, sur un deuxième type de porteuse du fait de la transmission de signaux sur un premier type de porteuse, dans lequel les premier et deuxième types de porteuse sont des porteuses composantes agrégées et dans lequel le premier type de porteuse est une porteuse avec accès sans contention et le deuxième type de porteuse est une porteuse avec un accès basé sur une contention ;
adapter au moins l'un parmi une mesure de signal et un seuil d'évaluation de canal dégagé, CCA, utilisé pour mettre en oeuvre une procédure CCA sur le deuxième type de porteuse pour décider s'il faut ou non transmettre un signal sur le deuxième type de porteuse, sur la base du paramètre ; et
mettre en oeuvre la procédure CCA sur le deuxième type de porteuse en utilisant cet au moins un adapté parmi la mesure de signal et le seuil CCA pour décider s'il faut ou non transmettre un signal sur le deuxième type de porteuse.

Primary Cell
Licensed Spectrum
UL
DL
Secondary Cell
Unlicensed Spectrum
Carrier Aggregation
UE

*Fig. 1*

eNB
UE
Rel-8 behavior
eNB
UE
1 UL & 2 DL CCs inter-band
eNB
UE
1 UL & 3 DL CCs inter-band
eNB
UE
2 UL & 2 DL CCs intra-band

Rel-8 single UL and single DL transmission to one UE

Fig. 2a

DL CA with a single UL transmission

Fig. 2b

DL carrier aggregation across 3 DL bands

Fig. 2c

Carrier aggregation in both UL and DL

Fig. 2d

F2 Cell
F1 Cell
F1 Cell
F2 Cell

CA Deployment Scenario (F2 > F1)

***Fig. 3a***

F2 Cell
F1 Cell
F2 Cell
F1 Cell

Another CA Deployment Scenario (F2 > F1)

***Fig. 3b***

UE
SeNB
Non-ideal backhaul
UE
MeNB
eNB
UE
Can be located very
far from each other
SeNB
Non-ideal backhaul
UE
UE
MeNB

*Fig. 4*

Spurious emission region
Δfoob
Channel bandwidth
Δfoob
Spurious emission region
RB
E-UTRA Band

Illustration of Unwanted Emissions

***Fig. 5***

40MHz
5
15
20
5
15
20
20
IM3
IM5
IM7
9MHz x 7 = 63MHz

Illustration of higher order intermodulation distortion for Band 2 CA

***Fig. 6***

Perform a listen-before-talk (LBT) procedure on at least one second type of carrier prior to transmission of signals on the at least one second type of carrier
700
Select, based on the result of the LBT procedure, between one of a first transmitter configuration and a second transmitter configuration for transmitting signals on at least one first type of carrier
702
Transmit signals through a transceiver circuit on the at least one first type of carrier using the one of the first transmitter configuration and the second transmitter configuration that was selected
704
Perform a clear channel assessment (CCA) procedure on a second type of carrier prior to transmission of signals on the second type of carrier
710
Select, based on the result of the CCA procedure, between one of a first transmitter configuration and a second transmitter configuration for transmitting signals on a first type of carrier
712
Transmit signals through a transceiver circuit on the first type of carrier using the one of the first transmitter configuration and the second transmitter configuration that was selected
714

*Fig. 7A*

*Fig. 7B*

Determine a parameter defining harmonics and/or inter-modulation distortion generated due to transmission of signals by at least one first type of carrier into at least one second type of carrier
800
Adapt at least one of a signal measurement and a LBT threshold used for performing a LBT procedure on at least one second type of carrier for deciding whether to transmit a signal or not on the at least one second type of carrier
802
Use the adapted value of the at least one of the signal measurement and the LBT threshold for performing the LBT procedure on the at least one second type of carrier
804

*Fig. 8A*

Determine a parameter defining harmonic distortion and/or inter-modulation distortion on a second type of carrier due to transmission of signals on a first type of carrier
810
Adapt at least one of a signal measurement and a CCA threshold used for performing a CCA procedure on the second type of carrier for deciding whether to transmit a signal or not on the second type of carrier, based on the parameter
812
Perform the CCA procedure on the second type of carrier using the adapted value of the at least one of the signal measurement and the CCA threshold
814

*Fig. 8B*

900
Did the LBT procedure fail on the second type of carrier?
Yes
No
902
904
Responsive to determining the LBT failed on the second type of carrier, select the first transmitter configuration for transmitting signals on the at least one first type of carrier
Responsive to determining the LBT is successful on the second type of carrier, select the second transmitter configuration for transmitting signals on the at least one first type of carrier

*Fig. 9A*

910
Did the CCA procedure fail on the second type of carrier?
Yes
No
912
914
Responsive to determining the CCA failed on the second type of carrier, select the first transmitter configuration for transmitting signals on the first type of carrier
Responsive to determining the CCA is successful on the second type of carrier, select the second transmitter configuration for transmitting signals on the first type of carrier

*Fig. 9B*

1000
Is the signal measurement during LBT procedure applied for the second type of carrier above a LBT threshold?
Yes
No
1002
1004
Responsive to determining that the signal measurement during LBT procedure applied for the second type of carrier is above the LBT threshold, selecting the first transmitter configuration for transmitting signals on the at least one first type of carrier
Responsive to determining signal measurement during the LBT procedure applied for the second type of carrier is not above LBT threshold, selecting the second transmitter configuration for transmitting signals on the at least one first type of carrier

*Fig. 10A*

1010
Is the signal measurement during CCA procedure applied for the second type of carrier above a CCA threshold?
Yes
No
1012
1014
Responsive to determining that the signal measurement during CCA procedure applied for the second type of carrier is above the CCA threshold, selecting the first transmitter configuration for transmitting signals on the first type of carrier
Responsive to determining signal measurement during the CCA procedure applied for the second type of carrier is not above CCA threshold, selecting the second transmitter configuration for transmitting signals on the first type of carrier

*Fig. 10B*

1100
Did the LBT procedure fail on the second type of carrier?
Yes
No
1102
1104
Responsive to determining the LBT procedure fails on the second type of carrier, not transmitting any signal through the transceiver circuit on the at least one first type of carrier using the first transmitter configuration
Responsive to determining the LBT procedure is successful on the second type of carrier, transmitting one or more signals through the transceiver circuit on the at least one first type of carrier in the second transmitter configuration

*Fig. 11A*

1110
Did the CCA procedure fail on the second type of carrier?
Yes
No
1112
1114
Responsive to determining the CCA procedure fails on the second type of carrier, not transmitting any signal through the transceiver circuit on the first type of carrier using the first transmitter configuration
Responsive to determining the CCA procedure is successful on the second type of carrier, transmitting one or more signals through the transceiver circuit on the first type of carrier in the second transmitter configuration

*Fig. 11B*

Transceiver
1220
Display
1230
User Input
Interface
1240
Speaker
1250
Processor
Circuit
1202
Memory Circuit
1210
Computer
readable
program code
1212
User Equipment 1200

*Fig. 12*

Network Interface
1320
Processor Circuit
1302
Computer readable
program code 1312
Memory Circuit 1310
Network Node 1300

*Fig. 13*

LBT/CCA Procedure Module 1402

Transmitter Configuration Selection Module 1404

Transmitter Module 1406

Node 1400

*Fig. 14*

Harmonic Distortion and/or IMD Parameter Determining Module 1502

Signal Measurement and LBT/CCA Threshold Adapting Module 1504

LBT/CCA Procedure Module 1506

Node 1500

*Fig. 15*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1011206 A2
- US 2014086081 A
- EP 1011206 A